(19) **Europäisches Patentamt European Patent Office Office européen des brevets**

(11) **EP 4 613 900 A1**

(12) **EUROPEAN PATENT APPLICATION**
published in accordance with Art. 153(4) EPC

(43) Date of publication:
**10.09.2025 Bulletin 2025/37**

(21) Application number: **23890713.3**

(22) Date of filing: **13.11.2023**

(51) International Patent Classification (IPC):
*C22C 38/02* (2006.01)       *C22C 38/04* (2006.01)
*C22C 38/06* (2006.01)       *C22C 38/24* (2006.01)
*C22C 38/26* (2006.01)       *C22C 38/28* (2006.01)
*C22C 38/32* (2006.01)       *C22C 38/38* (2006.01)
*C23C 2/12* (2006.01)        *C21D 1/26* (2006.01)
*C21D 9/00* (2006.01)        *C22C 33/04* (2006.01)

(86) International application number:
**PCT/CN2023/131146**

(87) International publication number:
**WO 2024/104279 (23.05.2024 Gazette 2024/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.11.2022   CN 202211417414**

(71) Applicant: **Ironovation Materials Technology Co., Ltd.
Suzhou, Jiangsu 215000 (CN)**

(72) Inventors:
• **YI, Hongliang
  Shenyang, Liaoning 110819 (CN)**
• **SUN, Zhengqi
  Suzhou, Jiangsu 215000 (CN)**
• **YANG, Dapeng
  Shenyang, Liaoning 110819 (CN)**
• **QIN, Huajie
  Suzhou, Jiangsu 215000 (CN)**
• **ZHOU, Shu
  Suzhou, Jiangsu 215000 (CN)**

(74) Representative: **Seemann & Partner
Patentanwälte mbB
Raboisen 6
20095 Hamburg (DE)**

(54) **STEEL SHEET FOR HOT STAMPING FORMING, HOT STAMPING FORMING MEMBER, AND STEEL SHEET MANUFACTURING METHOD**

(57)    The present invention relates to a hot stamping steel plate, a hot stamped component and a steel plate manufacturing method. The steel plate matrix of the hot stamping steel plate comprises, by mass percentage, $0.27\% \leq C \leq 0.35\%$, $0.70\% \leq Mn \leq 1.55\%$, $0.10\% \leq Si \leq 0.60\%$, $0.01\% \leq Cr \leq 0.70\%$, $0.001\% \leq B \leq 0.01\%$, $0.11\% \leq Al \leq 0.39\%$, $N \leq 0.006\%$, $0.001\% \leq Nb+Ti \leq 0.1\%$, $0.05\% \leq V \leq 0.20\%$, $0.001\% \leq P \leq 0.100\%$, $0.0001\% \leq S \leq 0.100\%$, $Fe \geq 95\%$ and unavoidable impurities, wherein Mf of the steel plate matrix satisfies $Mf \geq 230°C$ and hardenability coefficient h satisfies $h \geq 8.0$.

【Figure】 5

EP 4 613 900 A1

## Description

### FIELD OF THE INVENTION

The present invention relates to a steel plate for hot stamping, a hot-stamped component and a method for manufacturing the steel plate.

### BACKGROUND OF THE INVENTION

Lightweighting is an important approach to achieve energy conservation and emission reduction in the vehicle industry. The strength of the hot stamped components obtained through hot deformation and cooling of hot stamping steel can exceed 1500 MPa. When applied to the vehicle body, the hot stamped components have a significant lightweight effect and ensure the collision safety of the vehicle. Therefore, the adoption of hot stamped components in vehicles has been steadily increasing.

However, generally speaking, the improvement of steel plate strength will lead to a reduction in plasticity and toughness. Therefore, in the application of the vehicle field, the problems caused by insufficient toughness and delayed cracking of hot stamped components have attracted the attention of technicians. For example in the actual production process, it is often found that some hot stamped components undergo brittle cracking during placement, processing, transportation or welding after hot stamping, resulting in the scrapping of parts or even the entire vehicle body, thereby increasing production costs. More seriously, some hot stamped components undergo delayed cracking only after the vehicle is assembled, thereby increasing the safety hazards of the vehicle during driving. Therefore, when using hot stamped components, especially when their strength reaches more than 1700 MPa, it is crucial to ensure that the hot stamped components have sufficient toughness and delayed cracking resistance.

CN106399837A provides a steel material or formed component with high toughness and delayed cracking resistance. By adding more than 0.11% of V, a large amount of nano-scale VC and/or (V, Ti, Nb) C composite carbides are precipitated in the microstructure of the formed component. The precipitation of these carbides refines the grains, improving the yield strength and tensile strength of the material; Additionally, it consumes carbon in austenite, thereby reducing the proportion of brittle twin martensite generated, improving the toughness of martensite; thereby, it also improves the material's resistance to hydrogen-induced delayed cracking. Moreover, in order to obtain a complete martensitic structure, the patent adds more alloying elements that improve hardenability, such as Mn, Mo, etc., during alloy design. However, the above-mentioned high alloy design is more likely to cause the strip steel to generate a hard and brittle martensitic structure during hot rolling, annealing, coating and other processes, causing cold rolling cracking or even strip breakage. Moreover, the strength of the annealed or coated material is relatively high, which makes it difficult to process and control the plate shape during the entire production process, significantly increasing the difficulty and cost of producing steel. In addition, the patent also ignores the effect of coarse TiN particles on the toughness of steel plates.

In order to overcome the influence of TiN particles on the toughness of steel plates, CN108374127A designed two Ti-free alloy compositions: 1. Low B content design, in which the effect of B is replaced by a reasonable ratio of hardenability alloying elements such as Mn, Cr, and Mo, that is, when B≤0.0005%, 29*Mo+16*Mn+14*Cr+5.3*Ni>30% is satisfied; 2. High B content design, in which a certain amount of Al is added to replace the combination of Ti and N to avoid the precipitation of large-sized TiN particles, thereby improving the toughness of hot stamping steel plates and hot stamping formed components thereof, that is, when 0.0005%⸴B≤0.005%, 0.4-1.0% Al is contained. The hot stamping formed components obtained by the above alloy design can reach a yield strength of 1200-1800 MPa, a tensile strength of 1500-2150 MPa, and an elongation of 7-10% after tempering, and a 99.5% confidence level of -40°C impact toughness ≥45 J.cm-2. However, CN108374127A also does not consider the addition of high hardenability elements such as Mn, Cr, and Mo, which makes it easier to generate hard and brittle martensite during the production process, which is not conducive to cold rolling, annealing, coating and other processes and subsequent steel processing. In addition, the addition of 0.4-1.0% Al increases the difficulty of continuous casting production and the problem of grain boundary oxidation on the surface of the steel plate, which will lead to an increase in the manufacturing cost of the steel plate.

CN106574348A specifically controls the proportion of the content of four elements, such as C, Mn, Si and Cr, during alloy design, and ensures that a sufficiently low martensitic phase transformation start temperature Ms is obtained during the cooling period of the hot stamping process by adding 0.40-3% Mn, so that the tensile strength can be increased and the delayed cracking resistance can be improved. In addition, the patent teaches that when Ni is concentrated on the surface of a plate or component in a specific form, 0.25-2% Ni can significantly reduce the sensitivity to delayed cracking. However, it is well known that Ni is an expensive alloying element, and therefore, the addition of Ni is not conducive to cost-effective hot stamping steel sheets and formed components thereof. In addition, the patent increases the tensile strength by a low Ms temperature, but in actual production, the low Ms temperature will lead to the formation of hard and brittle twin martensite, which is not conducive to the improvement of the toughness of hot stamped components.

These prior arts fail to well control the martensitic phase transformation properties, which not only leads to the formation of hard and brittle twin martensite, which is not conducive to the subsequent processing process, but also has a significant impact on the toughness and delayed cracking performance of hot stamping steel and its formed components.

In summary, in order to meet the lightweight demand of the vehicle body, it is necessary to develop a hot stamping component with a strength of not less than 1700 MPa and sufficient toughness and delayed cracking resistance, a hot stamping steel plate for manufacturing the same, and a manufacturing method.

## Summary of the invention

The present invention is made in view of the above-mentioned problems existing in the prior art.

One of the objects of the present invention is to provide a hot stamping steel sheet with improved martensitic transformation properties. The steel sheet matrix of the hot stamping steel sheet of the present invention comprises, by mass percentage: 0.27%≤C≤0.35%, 0.70%≤Mn≤1.55%, 0.10%≤Si≤0.60%, 0.01%≤Cr≤0.70%, 0.001%≤B≤0.01%, 0.11%≤Al≤0.39%, N≤0.006%, 0.001%≤Nb+Ti≤0.1%, 0.05%≤V≤0.20%, 0.001%≤P≤0.100%, 0.0001 %≤S≤0.100%, Fe≥ 95% and unavoidable impurities;

Wherein, the martensitic transformation end temperature Mf of the steel plate matrix satisfies Mf≥ 230°C; and
The hardenability coefficient h of the steel plate matrix is calculated by the following formula and satisfies h≥8.0:

$$h=[6.9[Mn]^2+3.2[Si]+22.6[Cr]^2+23.1[Mo]+(13.0[Cr]+2.5[Mo]+9.7)[Ni]+7.9[B]\times 103+2.5]\times[C];$$

Wherein [X] is the mass percentage of the alloying element.

Mf is measured by experiment and testing method is with reference to "critical point determination of YB/T 5127-2018 steel" and is described in detail in a specific embodiment.

The calculation formula of h is obtained from h = [6.9[Mn]$^2$+3.2[Si]+22.6[Cr]$^2$+23.1[Mo]+(13.0[Cr]+2.5[Mo]+9.7) [Ni]+7.9[B]×103+2.5]×[C] in "Progress in Research on Prediction Model of Hardenability of Steel" by Zhang Guoqiang et al. (Acta Metallurgica Sinica, Vol. 44, No. 4, pp. 224-228, 2019).

Preferably, the steel sheet matrix for hot stamping further contains, by mass percentage, at least one of: 0.01%≤W≤0.30%, 0.01%≤Mo≤0.30%, 0.01%≤Ni≤0.30%, 0.01%≤Cu≤0.30%, 0.01%≤Co≤0.30%, 0.005%≤Sn≤0.30%, 0.005%≤Sb≤0.100%, 0.0001%≤Ca≤0.01%, 0.0001% ≤Mg≤0.01%, 0.0001%≤Zr≤0.01% and 0.0001%≤REM≤0.01%.

Preferably, 0.0001%≤W+Mo+Ni+Cu+Co+Sn+Sb+Ca+Mg+Zr+REM≤0.30%.

Preferably, the steel plate matrix of the hot stamping steel plate of the present invention comprises, by mass percentage, 0.27%≤C≤0.35%, 0.70%≤Mn≤1.55%, 0.10%≤Si≤0.60%, 0.01% ≤Cr≤0.70%, 0.001%≤B≤0.01%, 0.11%≤Al≤0.39%, N≤0.006%, 0.001%≤Nb+Ti≤0.1%, 0.05%≤V≤0.20%, 0.001%≤P≤0.100%, 0.0001%≤S≤0.100%, and the balance is Fe and unavoidable impurities.

Preferably, the steel sheet matrix of the hot stamping steel sheet comprises, by mass percentage, 0.27%≤C≤0.35%, 0.70%≤Mn≤1.55%, 0.10%≤Si≤0.60%, 0.01%≤Cr≤0.70%, 0.001%≤B≤ 0.01%, 0.11%≤Al≤0.39%, N≤0.006%, 0.001%≤Nb+Ti≤0.1%, 0.05%≤V≤0.20%, 0.001%≤ P≤0.100%, 0.0001%≤S≤0.100%, and at least one of the following: 0.01%≤W≤0.30%, 0.01% ≤Mo≤0.30%, 0.01%≤Ni≤0.30%, 0.01%≤Cu≤0.30%, 0.01%≤Co≤0.30%, 0.005%≤Sn≤ 0.30%, 0.005%≤Sb≤0.100%, 0.0001%≤Ca≤0.01%, 0.0001%≤Mg≤0.01%, 0.0001%≤Zr≤ 0.01% and 0.0001% ≤ REM ≤ 0.01%, and 0.0001% ≤ W+Mo+Ni+Cu+Co+Sn+Sb+Ca+Mg+Zr+REM ≤ 0.30%, and the balance is Fe and unavoidable impurities.

Preferably, Mf≥235°C.

Preferably, 8.3≤h≤13.5, further preferably, 8.4≤h≤12.5, more preferably, 8.5≤h≤11.5.

Preferably, 0.28%≤C≤0.345%.

Preferably, 0.15%≤Al≤0.38%.

Preferably, Al/N≥65, more preferably, Al/N≥75.

Preferably, Si+Cr≤0.70%.

Preferably, 0.80%≤Mn≤1.45%.

Preferably, 0.10%≤Si≤0.40%; 0.01%≤Cr≤0.40% and Si+Cr≤0.50%.

Preferably, 0.02%≤Nb+Ti≤0.06%. Preferably, 0.11%≤V≤0.20%.

Preferably, the average value of the 10-point Vickers hardness of the steel plate matrix does not exceed 300 HV0.3.

Preferably, the microstructure of the steel plate matrix comprises, in terms of area percentage: martensite+bainite≤30%, and the rest is ferrite+pearlite.

Preferably, an aluminum alloy coating is applied on at least one surface of the steel plate substrate.

Another object of the present invention is to provide a hot stamping component with high strength, high toughness and improved delayed cracking resistance. The hot stamping component of the present invention is composed of a steel plate substrate and an outer layer from the inside to the outside, and the steel plate substrate contains, by mass percentage: 0.27%≤C≤0.35%, 0.70%≤Mn ≤1.55%, 0.10%≤Si≤0.60%, 0.01%≤Cr≤0.70%, 0.001%≤B≤0.01%, 0.11%≤Al≤0.39%, N ≤0.006%, 0.001%≤Nb+Ti≤0.1%, 0.05%≤V≤0.20%, 0.001%≤P≤0.100%, 0. 0001%≤S≤ 0.100%, Fe≥95% and unavoidable impurities,

wherein, the Mf temperature of the steel plate matrix satisfies Mf≥230°C; and
The hardenability coefficient h of the steel plate matrix is calculated by the following formula and satisfies h≥8.0:

$$h=[6.9[Mn]^2+3.2[Si]+22.6[Cr]^2+23.1[Mo]+(13.0[Cr]+2.5[Mo]+9.7)[Ni]+7.9[B]\times 103+2.5]\times [C];$$

wherein [X] is the mass percentage of the alloying element.

Preferably, the steel plate matrix of the hot stamping formed component further comprises, by mass percentage, at least one of: 0.01%≤W≤0.30%, 0.01%≤Mo≤0.30%, 0.01%≤Ni≤0.30%, 0.01%≤Cu≤0.30%, 0.01%≤Co≤0.30%, 0.005%≤Sn≤0.30%, 0.005%≤Sb≤0.100%, 0.0001% ≤Ca≤0.01%, 0.0001%≤Mg≤0.01%, 0.0001%≤Zr≤0.01% and 0.0001%≤REM≤0.01%.

Preferably, 0.0001%≤W+Mo+Ni+Cu+Co+Sn+Sb+Ca+Mg+Zr+REM≤0.30%.

Preferably, the steel plate matrix of the hot stamping formed component contains, by mass percentage: 0.27%≤C≤0.35%, 0.70%≤Mn≤1.55%, 0.10%≤Si≤0.60%, 0.01%≤Cr≤0.70%, 0.001%≤B≤0.01%, 0.11%≤Al≤0.39%, N≤0.006%, 0.001%≤Nb+Ti≤0.1%, 0.05%≤V≤ 0.20%, 0.001%≤P≤0.100%, 0.0001%≤S≤0.100%, and the balance is Fe and unavoidable impurities.

Preferably, the hot stamping formed component is made of the aforementioned hot stamping steel plate of the present invention.

Preferably, the outer layer is composed of a decarburized layer of 1 to 20 μm, in which the hardness of the decarburized layer does not exceed 50% of the hardness at the center of the steel plate matrix. That is, along the thickness direction of the hot stamping formed component, from the outside to the inside, 50% of the hardness at the center of the steel plate matrix is used as the boundary between the decarburized layer and the steel plate matrix.

Preferably, the outer layer is a coating composed of an interdiffusion layer of 4 to 15 μm and an Fe and Al intermetallic compound layer outside the interdiffusion layer, wherein the Fe content of the interdiffusion layer is greater than or equal to 70% by mass percentage. That is, along the thickness direction of the hot stamping formed component, from the outside to the inside, the Fe content of 70% is used as the boundary between the interdiffusion layer and the intermetallic compound layer. Preferably, the outer layer has a thickness of 5 to 40μm.

Preferably, in terms of area percentage, the microstructure of the steel plate matrix of the hot stamping formed component is composed of: less than 4% bainite, less than 3% austenite, less than 3% ferrite, the remainder being dislocation martensite and less than 0.4% microalloy carbides and/or nitrides formed by V, Nb or Ti.

Preferably, in terms of area percentage, the sum of bainite + austenite + ferrite in the microstructure of the steel plate matrix of the hot stamping formed component does not exceed 5%.

Preferably, in terms of area percentage, the microstructure of the steel plate matrix of the hot stamping formed component contains 0.05-0.3% microalloy carbides and/or nitrides formed by V, Nb, Ti, etc., with an average size of 2-30 nm.

Preferably, the yield strength of the hot stamping formed component is 1200~1450 MPa, the tensile strength is 1750~2100 MPa, the elongation is ≥5%, and the fracture strain is ≥0.22-(UTS-1700)/5000.

Preferably, the yield strength of the hot stamping formed component is 1300~1600 MPa, the tensile strength is 1700~2050 MPa, the elongation is ≥5%, and the fracture strain is ≥0.22. Preferably, the yield strength of the hot stamping formed component is 1230~1420 MPa, the tensile strength is 1830~2030 MPa, the elongation is ≥5%, and the fracture strain is ≥0.23-(UTS-1750)/5000.

Preferably, the yield strength of the hot stamping formed component is 1350~1550 MPa, the tensile strength is 1750~2000 MPa, the elongation is ≥5%, and the fracture strain is ≥0.23.

Another object of the present invention is a method for manufacturing a pre-plated steel plate for hot stamping forming components, the method comprising:

a) annealing treatment: before coating, the steel plate substrate is heated to a temperature in the range of 740~870°C and kept warm for 30~300s, with a dew point in the range of -30~5°C,

the steel plate substrate contains, by mass percentage: 0.27%≤C≤0.35%, 0.70%≤Mn≤1.55%, 0.10%≤Si≤0.60%, 0.01%≤Cr≤0.70%, 0.001%≤B≤0.01%, 0.11%≤Al≤0.39%, N≤0.006%, 0.001%≤Nb+Ti≤0.1%, 0.05%≤V≤0.20%, 0.001%≤P≤0.100%, 0.0001%≤S ≤0.100%, Fe≥ 95% and unavoidable impurities, wherein the martensitic transformation finishing temperature Mf of the steel plate matrix satisfies: Mf≥230°C; and the hardenability coefficient h of the steel plate matrix is calculated by the following formula and satisfies h ≥ 8.0: h=[6.9[Mn]$^2$+3.2[Si]+22.6[Cr]$^2$+23.1[Mo] +(13.0[Cr]+2.5[Mo]+9.7)[Ni]+7.9[B] × 103+2.5] × [C];

wherein [X] is the mass percentage of the alloying element.

Preferably, the steel plate matrix further comprises, by mass percentage, at least one of: 0.01% ≤W≤0.30%, 0.01%≤Mo≤0.30%,    0.01%≤Ni≤0.30%,    0.01%≤Cu≤0.30%,    0.01%≤Co≤    0.30%,    0.005%≤Sn≤0.30%, 0.005%≤Sb≤0.100%, 0.0001%≤Ca≤0.01%, 0.0001%≤Mg≤ 0.01%, 0.0001%≤Zr≤0.01% and 0.0001%≤REM≤0.01%.

Preferably, 0.0001%≤W+Mo+Ni+Cu+Co+Sn+Sb+Ca+Mg+Zr+REM≤0.30%.

Preferably, the steel plate matrix has a remainder of Fe and unavoidable impurities in terms of mass percentage.

b) Heat preservation treatment: the annealed steel plate substrate is cooled to a predetermined temperature in the range of 630-670°C and kept warm for a time t, and t(F+P)≤t≤100 s, wherein t(F+P) is the time required for the steel plate substrate to generate 70% ferrite and pearlite when it is heated to different annealing temperatures and then cooled to 630-670°C;

c) Hot dip plating treatment: the steel plate substrate that has been kept warm in b) is immersed in a heated plating solution for hot dip plating, wherein the composition of the plating solution comprises, by mass percentage: 9-12% Si, 2-3% Fe and the balance is Al or Al alloy and inevitable impurities, during which the plating solution temperature is maintained at a temperature within the range of 630-670°C;

d) after the steel plate substrate leaves the plating solution and before the plating solution on at least one surface of the steel plate substrate solidifies, the excess plating solution on at least one surface is removed by air knife blowing to control the coating thickness on at least one surface; and

e) the steel plate substrate is cooled to room temperature to obtain a pre-plated steel plate with an aluminum or aluminum alloy coating.

Preferably, $t_{(F+P)}$≤$t$≤60 s; more preferably, $t_{(F+P)}$≤$t$≤40 s. Preferably, $t_{(F+P)}$ does not exceed 35 s, more preferably, $t_{(F+P)}$ does not exceed 20 s.

Preferably, the plating solution temperature is not higher than the insulation temperature of the steel plate substrate in b).

By performing a decarburization treatment (dew point in the range of -30~5°C, preferably - 28~-5 °C) before hot dip plating, the pre-plated steel plate has an initial low carbon zone. In the subsequent hot stamping process, the initial interface movement caused by the mutual diffusion between the coating and the steel plate substrate first occurs in the initial low carbon zone. The presence of the initial low carbon zone causes very few carbon atoms in the newly generated interdiffusion layer to diffuse to the side of the base steel plate and form enrichment, thereby reducing the formation of brittle martensite during subsequent cooling, which is beneficial to improving the toughness of the hot stamping formed component.

The present invention determines the C content of 0.27-0.35% on the basis of the reasonable ratio of alloy components so that the hot stamping forming components and hot stamping forming steel sheets of the present invention have Mf≥230°C and h≥8.0, thereby obtaining products with high strength, high toughness and improved delayed cracking resistance. Mf≥230°C avoids the formation of hard and brittle twin martensite during the phase transformation process, thereby improving the toughness and delayed cracking resistance of martensite. At the same time, h≥8.0 enables the hot stamping steel sheet to have sufficient hardenability to generate at least 95% of martensite structure, preferably more than 97% martensite, when undergoing the hot stamping forming process, thereby ensuring high strength. The combination of the two enables the hot stamped components to have improved toughness and delayed cracking resistance while ensuring high strength.

Specifically, the present invention aims to obtain a hot stamping component with a martensitic matrix that has high strength, good toughness and delayed cracking resistance. Generally, martensite in steel can be divided into two types: dislocation type and twin type. Dislocation martensite, also known as low-carbon lath martensite, has a high formation temperature. Its high dislocation density causes carbon atoms to be mainly enriched on the dislocation line, forming dislocation gas masses, and does not form an oversaturated interstitial solid solution. The martensite lattice lattice does not undergo obvious distortion, and is a body-centered cubic structure. Therefore, its high strength is mainly achieved through the interaction between carbon atoms and high-density dislocations. At the same time, dislocations can slip during the deformation process. Therefore, while having high strength, dislocation martensite has high ductility and toughness. In contrast, twin martensite, also known as high-carbon lamellar martensite, has a low formation temperature. A large number of carbon atoms in the lattice are in an oversaturated interstitial solid solution, resulting in obvious distortion of the lattice lattice, forming a body-centered square structure and a large number of fine twin substructures. Supersaturated carbon and fine twins make the twin martensite have ultra-high strength, but the fine twins hinder the slip of dislocations. At the same time, the lattice distortion is serious, all of which lead to the brittleness of the twin martensite. Based on the above considerations, in order to obtain a high-strength and high-toughness martensitic steel, the present invention proposes to control the C content of the material and the content of other alloying elements in combination with the characteristics of the hot stamping production process, and adjust the martensitic phase transition temperature while ensuring hardenability to inhibit the formation of brittle twin martensite in the organization. Therefore, when designing the alloy ratio, it is not based on only high strength or only high toughness, but needs to consider both at the same time.

In order to suppress the generation of twin martensite, the present invention proposes to control the strength of austenite. This is because, during the martensitic phase transformation, the transformation of austenite to martensite is mainly a shear phase transformation, which occurs by the migration of martensite to the austenite interface, wherein the resistance of the interface migration mainly comes from the strength of austenite. The higher the strength of austenite, the greater the difficulty of phase interface migration, and the dislocation is difficult to slip, so that the interface migration has to be realized in a way of forming a twin substructure, thereby leading to the generation of twin martensite. Therefore, the present invention recognizes that in order to suppress the generation of twin martensite, the strength of austenite needs to be reduced. In the present invention, the strength of austenite is mainly reduced by the following two aspects.

First, control the C content. As is well known, as a solid solution strengthening element in steel, C can strengthen austenite, thus easily leading to the formation of twinned martensite and deteriorating the toughness of the final steel plate structure. Therefore, in order to take both strength and toughness into account, the present invention controls the C content within the range of 0.27-0.35%.

Second, control the martensitic transformation end temperature Mf. The present invention realizes that the martensitic transformation temperature of steel directly affects the generation of twin martensite, and compared with the martensitic transformation start temperature, the martensitic transformation end temperature Mf has a more significant effect on the formation of twin martensite. This is because, although the martensitic transformation begins to generate dislocation martensite, as the temperature decreases, the generated martensite squeezes the original austenite, resulting in an increase in austenite strength, making it difficult for dislocation slip to occur, and thus starting to generate twin martensite. The lower the martensitic transformation end temperature Mf, the higher the strength of the untransformed austenite at low temperatures, and thus it is easier to form twin martensite. That is, when the C content is the same, a lower Mf temperature will result in easier generation of twin martensite at low temperatures. Therefore, in order to suppress the generation of twin martensite, the present invention proposes to control Mf. For hot stamping steel and hot stamped components, high hardenability elements such as Mn and Cr are added to the steel plate in large quantities to improve hardenability, so that the steel plate obtains more martensitic structure to have high strength. However, on the one hand, the addition of the above-mentioned high content of alloying elements will reduce the Mf temperature, which makes it easier to generate hard and brittle twin martensite during the phase transformation process, which reduces the toughness of the component and deteriorates the delayed cracking resistance; on the other hand, the excessive improvement of hardenability brought by the high content of alloying elements will increase the difficulty of steel plate production and processing, which is not conducive to controlling production quality and cost. In view of this, on the basis of 0.27~0.35% C content, the present invention optimizes the content of elements such as Mn and Cr and adds an appropriate amount of Al and other elements that increase the Mf temperature, and at the same time obtains a higher Mf (Mf $\geq$ 230 °C) and a suitable hardenability coefficient h (h $\geq$ 8.0), which can optimize the toughness of martensite itself by obtaining as many dislocation martensite structures as possible while ensuring strength. The present invention finds that, under the synergistic effect of appropriate C content, hardenability and high Mf temperature, the strength of austenite during the cooling process is effectively controlled, so that when the martensite phase transforms, it tends to generate as much strong and tough dislocation martensite with high dislocation density as possible, and the generation of brittle twin martensite is suppressed. Therefore, the final material has high strength, high toughness and delayed cracking resistance.

Preferably, the upper limit of the hardenability coefficient (h$\leq$13.5) can be further limited to improve manufacturability and increase economic benefits. Specifically, h$\leq$13.5 can improve the economy of material manufacturing, that is, it can avoid generating too much hard and brittle martensite phase in the production and manufacturing process (such as continuous casting, hot rolling, cold rolling and coating, etc.), thereby ensuring that the ingot, hot coil and coated finished coil have uniform and suitable hardness, reducing the occurrence of problems such as slab cracks, cold rolling cracking or broken strips, and also improving the plate shape of the steel plate after cold rolling and coating, and the difficulty of subsequent processing (such as trimming, punching, leveling) of annealing or coating finished products is also reduced. Therefore, by further setting the upper limit of hardenability, it is ensured that the proportion of martensite after hot stamping is not less than 95%, and it is ensured that the steel plate before hot stamping has good processing performance. At the same time, the hot rolled plate and coated/annealed plate in the steel plate production link have low tensile strength and low production cost.

In addition, preferably, the Al element of appropriate content and the ratio of Al/N are added in the alloy, which is also another important consideration of the present invention. The addition of a certain amount of Al can also form AlN with N, in addition to ensuring a higher Mf temperature, to play a solid N effect, thereby preventing the combination of N and B to ensure the effect of B's promotion of hardenability. And because AlN is formed at a relatively low temperature, the AlN particle size formed is relatively small and difficult to grow up, and it is not easy to cause serious damage to the toughness of steel. However, the addition of too much Al can significantly improve the austenite transformation end temperature of the steel, resulting in complete austenitization not occurring during hot stamping heating, and at the same time, it can also cause the problem of increased resistance of the crystallizer mouth during continuous casting. In addition, too much Al can also cause the hot-rolled steel sheet surface layer to form grain boundary oxides and aggregate, affecting the pickling effect. Therefore, the present invention requires that the Al content range be controlled to be 0.11~0.39%. Furthermore, the present invention has found that, when the N content does not exceed 0.006%, controlling Al/N≥65 can ensure that the addition of Al can ensure the effect of B in improving the hardenability while effectively avoiding increasing the production difficulty of the continuous casting link and the problem of grain boundary oxidation on the surface of the steel plate.

The hot stamping formed component according to the present invention has sufficient toughness and delayed cracking resistance and high strength, showing good lightweight potential. The hot stamping formed component has the following properties: yield strength 1200~1450 MPa, tensile strength UTS: 1750~2100 MPa, elongation ≥5%, fracture strain ≥0.22-(UTS-1700)/5000. The higher fracture strain reflects that the component has sufficient toughness and delayed cracking resistance, which significantly reduces the risk of delayed cracking of the component during placement, processing, transportation and welding after hot stamping or after loading.

Those skilled in the art will appreciate that any range or any value within the above-mentioned respective intervals is applicable to the present invention.

## BRIEF DESCRIPTION OF THE DRAWINGS

The embodiments, features and advantages of the present invention will become clear from the subsequent description in conjunction with the accompanying drawings, in which:

Figure 1 is a schematic diagram of the phase change expansion curve and Mf temperature calculation of the cooling process of the T1 pre-plated steel plate;

Figure 2 is a schematic diagram of the phase change expansion curve and t(F+P) calculation of the T1 pre-plated steel plate during the insulation process when the annealing temperature is 820°C and the insulation temperature is 647°C;

Figure 3 is the SEM microstructure of the steel plate matrix of the T1 pre-plated steel plate;

Figure 4 is the SEM microstructure of the steel plate matrix of the CT1 pre-plated steel plate;

Figure 5 is the SEM microstructure of the steel plate matrix of the untempered T1 hot stamping formed component Microstructure;

Figure 6 is the TEM microstructure of the steel plate matrix of the untempered T1 hot stamping component;

Figure 7 is the relationship between the martensitic phase transformation end temperature Mf and the fracture strain of the untempered hot stamping component;

Figure 8 is the TEM microstructure of the steel plate matrix of the untempered CT1 hot stamping component;

Figure 9 is the SEM microstructure of the steel plate matrix of the untempered T5 hot stamping component; and

Figure 10 is the relationship between the tensile strength and the fracture strain of the untempered hot stamping component.

## DETAILED DESCRIPTION OF THE INVENTION

The present invention is described in more detail below in conjunction with exemplary embodiments. The description of the chemical element content (%) herein refers to weight percentage. Unless otherwise specified, the preferred embodiments can be freely combined as needed. Unless explicitly stated, all ranges include end values. Those skilled in the art will understand that the data and various parameters recorded in the embodiments are only exemplary and do not constitute a limitation of the present invention.

The steel plate matrix of the first exemplary hot stamping formed component of the present invention comprises, by mass percentage, 0.27%≤C≤0.35%, 0.70%≤Mn≤1.55%, 0.10%≤Si≤0.60%, 0.01%≤Cr≤0.70%, 0.001%≤B≤0.01%, 0.11%≤Al≤0.39%, N≤0.006%, 0.001%≤ Nb+Ti≤0.1%, 0.05%≤V≤0.20%, 0.001%≤P≤0.100%, 0.0001%≤S≤0.100%, Fe≥95% and unavoidable impurities, wherein the hardenability coefficient h≥8.0 and Mf≥230°C of the steel plate matrix.

Preferably, the steel plate matrix of the second exemplary hot stamping formed component of the present invention comprises, by mass percentage, 0.28%≤C≤0.345%, 0.90%≤Mn≤1.45%, 0.20%≤Si≤0.50%, 0.05%≤Cr≤0.50%, 0.0017%≤B≤0.005%, 0.15%≤Al≤0.38%, 0.002%≤ N≤0.0045%, 0.02%≤Nb+Ti≤0.06%, 0.14%≤V≤0.20%, 0.001%≤P≤0.100%, 0.0001%≤S≤ 0.100%, Fe≥95% and unavoidable impurities, wherein the hardenability coefficient h≥8.0 and Mf ≥230°C of the steel plate matrix.

Preferably, the steel plate matrix of the third exemplary hot stamping formed component of the present invention comprises, by mass percentage, 0.28%≤C≤0.31%, 1.05%≤Mn≤1.40%, 0.20% ≤Si≤0.35%, 0.06%≤Cr≤0.15%, 0.0018%≤B≤0.004%, 0.20%≤Al≤0.36%, N≤0.004%, 0.002%≤Nb+Ti≤0.05%, 0.10%≤V≤0.16%, 0.001%≤P≤0.100%, 0.0001%≤S≤0.100%, Fe≥ 95% and unavoidable impurities, wherein the hardenability coefficient h≥8.0 and Mf≥230°C of the steel plate matrix.

Preferably, the steel sheet matrix of the first, second and third exemplary hot stamping formed components has a remainder of Fe and unavoidable impurities in terms of mass percentage.

Further preferably, the steel plate matrix of the first, second and third exemplary hot stamping formed components further comprises, by mass percentage, at least one of: 0.01%≤W≤0.30%, 0.01% ≤Mo≤0.30%, 0.01%≤Ni≤0.30%, 0.01%≤Cu≤0.30%, 0.01%≤Co≤0.30%, 0.005%≤Sn≤ 0.30%, 0.005%≤Sb≤0.100%, 0.0001%≤Ca≤0.01%, 0.0001%≤Mg≤0.01%, 0.0001%≤Zr≤ 0.01% and 0.0001%≤REM≤0.01%.

Preferably, 0.0001%≤W+Mo+Ni+Cu+Co+Sn+Sb+Ca+Mg+Zr+REM≤0.30%.

Preferably, the steel plate matrix of the hot stamping formed component of the present invention comprises, by mass percentage, 0.27%≤C≤0.35%, 0.70%≤Mn≤1.55%, 0.10%≤Si≤ 0.60%, 0.01%≤Cr≤0.70%, 0.001%≤B≤0.01%, 0.11%≤Al≤0.39%, N≤0.006%, 0.001%≤ Nb+Ti≤0.1%, 0.05%≤V≤0.20%, 0.001%≤P≤0.100%, 0.0001%≤S≤0.100%, and at least one of the following: 0.01%≤W≤0.30%, 0.01%≤Mo≤0.30%, 0.01%≤Ni≤0.30%, 0.01%≤Cu≤ 0.30%, 0.01%≤Co≤0.30%, 0.005%≤Sn≤0.30%, 0.005%≤Sb≤0.100%, 0.0001%≤Ca≤0.01%, 0.0001%≤Mg≤0.01%, 0.0001%≤Zr≤0.01% and 0.0001%≤REM≤0.01%, and 0.0001%≤ W+Mo+Ni+Cu+Co+Sn+Sb+Ca+Mg+Zr+REM≤0.30%, the remainder being Fe and unavoidable impurities, wherein the hardenability coefficient of the steel plate matrix is h≥8.0 and Mf≥230°C.

Preferably, the steel plate matrix of the hot stamping formed component of the present invention comprises, by mass percentage, 0.28%≤C≤0.345%, 0.90%≤Mn≤1.45%, 0.20%≤Si≤ 0.50%, 0.05%≤Cr≤0.50%, 0.0017%≤B≤0.005%, 0.15%≤Al≤0.38%, 0.002%≤N≤0.0045%, 0.02%≤Nb+Ti≤0.06%, 0.14%≤V≤0.20%, 0.001%≤P≤0.100%, 0.0001%≤S≤0.100%, and at least one of the following: 0.01%≤W≤0.30%, 0.01%≤Mo≤0.30%, 0.01%≤Ni≤0.30%, 0.01% ≤Cu≤0.30%, 0.01%≤Co≤0.30%, 0.005%≤Sn≤0.30%, 0.005%≤Sb≤0.100%, 0.0001%≤Ca ≤0.01%, 0.0001%≤Mg≤0.01%, 0.0001% ≤Zr≤0.01% and 0.0001%≤REM≤0.01%, and 0.0001%≤W+Mo+Ni+Cu+Co+Sn+Sb+Ca+Mg+Zr+REM≤0.30%, the remainder being Fe and unavoidable impurities, wherein the hardenability coefficient of the steel plate matrix is h≥8.0 and Mf≥230°C.

Preferably, the steel plate matrix of the hot stamping formed component of the present invention comprises, by mass percentage, 0.28%≤C≤0.31%, 1.05%≤Mn≤1.40%, 0.20%≤Si≤ 0.35%, 0.06%≤Cr≤0.15%, 0.0018%≤B≤0.004%, 0.20%≤Al≤0.36%, N≤0.004%, 0.002%≤ Nb+Ti≤0.05%, 0.10%≤V≤0.16%, 0.001%≤P≤0.100%, 0.0001%≤S≤0.100%, and at least one of the following: 0.01%≤W≤0.30%, 0.01%≤Mo≤0.30%, 0.01%≤Ni≤0.30%, 0.01%≤Cu≤ 0.30%, 0.01%≤Co≤0.30%, 0.005%≤Sn≤0.30%, 0.005%≤Sb≤0.100%, 0.0001%≤Ca≤0.01%, 0.0001%≤Mg≤0.01%, 0.0001%≤Zr≤0.01% and 0.0001%≤REM≤0.01%, and 0.0001%≤ W+Mo+Ni+Cu+Co+Sn+Sb+Ca+Mg+Zr+REM≤0.30%, the remainder being Fe and unavoidable impurities, wherein the hardenability coefficient of the steel plate matrix is h≥8.0 and Mf≥230°C.

The chemical composition of the steel plate matrix of the hot stamped component of the present invention is described in detail as follows:

C: 0.27~0.35%

The C element is the most effective alloying element for improving the strength of the steel plate. For martensitic steel, the C element, as an important interstitial solid solution strengthening element, has a significant solid solution strengthening effect. Therefore, a C content lower than 0.27% cannot make the martensite have a sufficiently high strength. However, too much C is likely to lead to the formation of brittle twin martensite. Therefore, in order to ensure the toughness of martensite, the C content should not be too high. In addition, a high C content will also deteriorate the welding performance of the material. Finally, the C content in the steel also significantly affects the phase change characteristics of the steel, especially the Mf temperature. The higher the C content, the lower the Mf temperature, and the low Mf temperature is more likely to lead to the formation of hard and brittle twin martensite structure. Therefore, in order to ensure that the component has high strength and good toughness and welding performance, the C content of the present invention is in the range of 0.27~0.35%. In order to ensure that the steel obtains a better match between strength and toughness, the C content is preferably between 0.28 and 0.345%, and the C content is more preferably between 0.28 and 0.31%.

Mn: 0.70~1.55%

Mn has the effect of improving hardenability and significantly increasing austenite stability. When a certain amount of Mn is added to the alloy composition, during the heating process, Mn can reduce the austenite transformation end temperature, that is, expand the temperature range of complete austenitization, and during the cooling process, it can delay the formation of ferrite and bainite to promote martensitic phase transformation. Therefore, for hot stamping parts, a certain amount of Mn is usually added to the alloy. However, when the Mn content exceeds 1.55%, it has little effect on improving strength, but will cause segregation to be difficult to control and cause the Mf temperature to be significantly reduced, resulting in a significant reduction in the toughness and delayed cracking resistance of the hot stamping parts. Therefore, the Mn content of the present invention is in the range of 0.70~1.55%. Further, the Mn content is in the range of 0.80~1.45%.

N≤0.006%

N is an impurity element in steel. Especially for steel containing B, its combination with B will significantly reduce the effect of B in improving hardenability. Therefore, it is necessary to reduce the content of N as much as possible. However, in industrial production, various processes for removing N all mean an increase in production costs. Therefore, considering the production costs comprehensively, the content of N in the present invention is controlled to be no more than 0.006%.

0.11%≤Al≤0.39%, Al/N≥65

Al is an important element in the present invention. First, Al is a strong deoxidizing element and is often used as a deoxidizer during steel melting. Secondly, Al is a ferrite stabilizing element and can increase the Mf temperature, which is opposite to the influence of elements such as C, Mn, and Cr on the Mf temperature, and thus helps to reduce the formation of hard and brittle twin martensite. Furthermore, Al can form AlN with N, which has the effect of solidifying N, thereby preventing the combination of N and B and ensuring the effect of B in improving hardenability. Moreover, since the formation temperature of AlN is relatively low, the AlN particles formed are relatively small in size and are not prone to cause serious damage to the toughness of the steel. For this reason, it is hoped that the Al content is not less than 0.11%. However, when the Al content is too much, the austenite transformation end temperature of the steel will be significantly increased, resulting in the inability to completely austenitize during hot stamping heating. At the same time, it will also cause problems such as increased resistance at the crystallizer mouth during continuous casting and difficulty in pickling due to surface grain boundary oxidation of the hot-rolled steel plate. Therefore, the Al content of the present invention is in the range of 0.11-0.39%, preferably in the range of 0.15-0.38%. In addition, the present invention finds that the content range of the Al element can be further controlled by limiting Al/N≥65, while ensuring the effect of B on improving hardenability, while avoiding increasing the production difficulty of the continuous casting link and the problem of grain boundary oxidation on the surface of the steel plate.

Si: 0.10~0.40%

Si is dissolved in the matrix and has the effect of improving the strength of the matrix. On the other hand, it can also be used as a deoxidizer in the steelmaking process. For this reason, more Si needs to be added. However, more Si causes different degrees of grain boundary oxidation and decarburization to form on the surface of the steel plate at different positions during the cooling process of the steel coil after hot rolling, which affects the pickling effect of the steel coil and ultimately affects the surface quality of the finished product. Therefore, the Si content of the present invention is in the range of 0.10~0.40%.

Cr: 0.01~0.40%

Cr is an element that improves the hardenability of steel. At the same time, Cr has a significant effect on the anti-oxidation of steel and the prevention of surface decarburization. However, more Cr will make the oxide scale on the surface of the hot-rolled coil difficult to pickle, affecting the surface quality of the final product. Therefore, the Cr content of the present invention is in the range of 0.01~0.40%.

Si+Cr≤0.70%

Since Si and Cr deteriorate the pickling effect of hot-rolled coils through oxidation, which in turn leads to a decrease in the surface quality of the finished product. Therefore, preferably, the sum of Si and Cr is expected to be no higher than 0.70% in the present invention, and further, no higher than 0.50%.

B: 0.001~0.01%

B can be segregated at the austenite grain boundary during hot stamping, thereby inhibiting the formation of ferrite and significantly improving the hardenability of steel. Therefore, a certain amount of B is added to the component of the present invention. However, too high a B content will lead to boron embrittlement, which is not conducive to performance. Therefore, the B content of the present invention is in the range of 0.001~0.01%.

0.001%≤Nb+Ti≤0.1%, 0.05%≤V≤0.20%

V, Nb, and Ti can form carbides in steel, which play a ssrole in grain refinement and precipitation strengthening. At the same time, the generation of the above carbides consumes the carbon content in the matrix, which further improves the strength and toughness of the final product. However, the excessive addition of these elements will not only not further improve the strength and toughness, but also lead to a significant increase in production costs. In addition, Ti and N have a strong binding force and will form TiN with N in a solid solution state in steel. Although the combination of N and B elements is avoided and the effect of B is guaranteed, since TiN precipitates at a higher temperature, it is easy to grow into coarse TiN particles during the subsequent cooling process of the slab, which is not conducive to the toughness of the steel plate. Therefore, the sum of the contents of Nb and Ti in the present invention is 0.001~0.10%, and the content of V is in the range of 0.05~0.20%. Further, the sum of the contents of Nb and Ti is in the range of 0.02 to 0.06%, and the content of V is in the range of 0.11 to 0.20%.

P: 0.001%~0.100%

P is an inevitable element in steel. On the one hand, P can improve the strength of steel plates relatively cheaply as a solid solution strengthening element. On the other hand, when the P content exceeds 0.100%, P will be segregated at the grain boundaries, resulting in adverse effects such as a significant decrease in toughness. Therefore, the upper limit of the P content is not more than 0.100%, preferably not more than 0.050%. In addition, considering that making the P content less than 0.001% will increase the melting cost, the lower limit of the P content is not less than 0.001%, preferably not less than 0.004%.

S: 0.0001%~0.100%

Like P, S is also an inevitable element in steel, and will react with Mn in steel to become an inclusion in the steel in the form of MnS. When the S content exceeds 0.100%, a large amount of MnS will significantly damage the ductility and toughness of the steel, causing the workability to deteriorate. Therefore, the upper limit of the S content is not more than 0.100%, preferably not more than 0.015%. Similarly, considering that lowering the S content to less than 0.0001% will increase the melting cost, the lower limit of the S content is not less than 0.0001%, preferably not less than 0.0005%, and more preferably not less than 0.001%.

In addition, other elements that may be contained in the steel plate matrix of the hot stamping formed component are described.

W, Mo, Ni, Cu, Co: 0.01-0.30%

The addition of W, Mo, Ni, Cu, and Co can improve the hardenability of steel, but the addition of these alloy elements will increase the cost of the alloy, so only an appropriate amount is added to the material. At the same time, Ni, Cu, and Co also have the benefit of improving the toughness of the material. When the content of each element is not less than 0.01%, the above beneficial effects can be shown. Therefore, preferably, the lower limit of the content of the five elements is not less than 0.01% respectively. At the same time, considering the economy of the material alloy, preferably, the upper limit of the content of the five elements is not more than 0.30% respectively. In this case, while being able to improve toughness, it is ensured that the hardenability of the steel is less affected and the machinability of the steel is guaranteed.

Sn: 0.005-0.30%, Sb: 0.005-0.100%

When the content of Sn and Sb is not less than 0.005%, the wettability of the coating can be improved. Therefore, the lower limits of the content of Sn and Sb are preferably not less than 0.005%, respectively. However, in the case of containing more than 0.300% Sn and/or more than 0.100% Sb, the toughness of the material will deteriorate. Therefore, the content of Sn is preferably not more than 0.300%, and the content of Sb is preferably not more than 0.100%.

Ca: 0.0001-0.01%, Mg: 0.0001-0.01%, Zr: 0.0001-0.01%, REM: 0.0001-0.01%

REM (Rare Earth Metal) of not less than 0.0001% can play a role in purifying molten steel, changing the form and distribution of impurities in steel, and refining grains. Ca, Mg, and Zr can achieve the effect of refining inclusions by having a content of not less than 0.0001%, thereby improving the performance of the material. Therefore, the contents of Ca, Mg, Zr, and REM are preferably not less than 0.0001%, respectively. On the other hand, when the content of each element exceeds 0.01%, the above effects are saturated. Therefore, the contents of Ca, Mg, Zr, and REM are preferably not more than 0.01%, respectively.

Preferably, considering the cost of the alloy, the sum of the contents of W, Mo, Ni, Cu, Co, Sn, Sb, Ca, Mg, Zr and REM elements is in the range of 0.0001% to 0.30%. In general, the steel plate matrix of the present invention may contain elements such as W, Mo, Ni, Cu, Co, Sn, Sb, Ca, Mg, Zr and REM, and the presence of these elements does not affect the solution of the technical problem of the present invention.

In this embodiment, there is no particular limitation on other components of the steel sheet matrix of the hot stamping component. For example, sometimes elements such as As are mixed into the scrap, but if they are within the normal range, they will not affect the properties of the steel sheet matrix of the hot stamping steel sheet.

To ensure the high strength of the component, in the case of high C content, it is also hoped that the steel plate obtains as much martensitic structure as possible after hot stamping, therefore, it is necessary to ensure that the steel plate has sufficient hardenability. A large number of experiments have shown that the hardenability coefficient h of the component of the present invention should be not less than 8.0 to ensure the generation of sufficient martensitic phase (not less than 95% by area percentage) and obtain a tensile strength of not less than 1700 MPa. At the same time, in order to make the hot stamping formed component also have improved toughness and delayed cracking resistance under high strength, the present invention proposes that the component also needs to have a high Mf temperature. The specific explanation is as follows.

Generally, in order to improve the strength of the material, the content of alloying elements such as C, Mn, and Cr will be increased. These alloying elements are all stable austenitizing elements, so that austenite can exist at a lower temperature, that is, the strength of austenite is increased. Since the martensitic phase transformation is a shear mechanism, when the strength of austenite is relatively low, dislocation slip is likely to occur, and the martensitic phase transformation is mainly based on dislocation deformation, generating dislocation-type lath martensite; when the strength of austenite is relatively high, the martensitic phase transformation is mainly based on twinning deformation, generating twin martensite. Therefore, if it is not reasonably controlled, the higher alloying elements such as C, Mnss, and Cr in the steel will reduce the end temperature of the martensitic phase transformation, improve the strength of austenite, and tend to generate hard and brittle twin martensite, which damages the toughness of the steel. This is also one of the important reasons why hot stamped components with a tensile strength of not less than 1700 MPa are prone to delayed cracking failure during placement, transportation, and subsequent welding after hot stamping. Therefore, the present invention emphasizes that when developing hot stamped components with a strength of more than 1700 MPa, it is necessary to reasonably match other alloying elements under the condition of appropriate C content to simultaneously meet the requirements of hardenability and Mf temperature, so that high toughness and improved delayed cracking resistance can be obtained while obtaining high strength. Specifically, the content of elements such as Mn and Cr is adjusted to weaken their effect of reducing the end temperature of martensitic transformation on the basis of ensuring hardenability, and an appropriate amount of alloying elements such as Al that increase the Mf temperature are added to obtain a sufficiently high Mf temperature. The present invention finds that with a C content of 0.27~0.35%, Mf ≥ 230 °C and hardenability of h ≥ 8.0, the martensitic transformation will occur at a higher temperature, and the austenitic strength is effectively controlled, so that the martensitic transformation tends to generate as much dislocation martensite with high dislocation density as possible, inhibiting the generation of brittle twin martensite, so that the final material has both high strength, high toughness and improved delayed cracking resistance. Furthermore, when the Mf temperature is above 235°C, the toughness and delayed cracking problems of the steel plate will be further improved.

Preferably, in order to improve the manufacturability of the steel sheet for hot stamping, the hardenability of the steel sheet should not be too high, so as to avoid the generation of too much hard and brittle martensite phase in the production process of the steel sheet (such as continuous casting, hot rolling and coating, etc.), ensure that the cast billet, hot coil and coated finished coil have uniform and suitable hardness, reduce the occurrence of problems such as slab cracks, cold rolling cracking or strip breakage, and also improve the plate shape in the cold rolling and coating process. At the same time, the difficulty of subsequent processing (such as trimming, punching, leveling) of the precoated steel sheet is also reduced. Therefore, after a large number of experimental verifications, the hardenability coefficient h of the component of the present invention should be no more than 13.5, further, no more than 12.5, and further, no more than 11.5, so that the obtained hot stamping component has both high mechanical properties and improved manufacturability.

The hot stamping formed component is composed of a steel plate matrix and an outer layer from the inside to the outside. When there is no pre-plating layer on the surface of the steel plate used for hot stamping, a decarburized layer of a certain thickness will be formed on the surface during the hot stamping process, and the decarburized layer is the above-mentioned outer layer. The presence of a decarburized layer of a certain thickness ensures that the component has good bending toughness. However, a thicker decarburized layer not only damages the strength of the component, but also reduces the peak force of the VDA bending test. Therefore, the decarburized layer thickness of the present invention is 1 to 20 μm and the decarburized layer thickness is defined as follows: by Vickers hardness test, from 50% of the hardness at the center of the steel plate matrix where the Vickers hardness is equal to to the surface of the hot stamping formed component. When there is an aluminum or aluminum alloy pre-plating layer on the surface of the steel plate used for hot stamping, during the hot stamping process, the elements in the aluminum or aluminum alloy pre-plating layer and the steel plate matrix will diffuse to form an interdiffusion layer and an Fe and Al intermetallic compound layer. At this time, the outer layer of the hot stamping formed component is a coating composed of an interdiffusion layer and an Fe and Al intermetallic compound layer outside the interdiffusion layer, and the thickness is 5-40 $\mu$m, wherein the thickness of the interdiffusion layer is 4-15 $\mu$m and the interdiffusion layer is mainly $\alpha$-Fe rich in Al and Si, wherein the Fe content is greater than or equal to 70% by weight.

After designing by above-mentioned alloy, in area percentage, the microstructure of the steel plate matrix of described member is by following composition: be less than 5% bainite, be less than 3% austenite, be less than 3% ferrite, remainder is dislocation martensite and be less than the carbide and/or nitride that 0.4% V, Nb, Ti etc. form. Preferably, in order to further improve intensity and toughness, the less the better of the non-martensitic phase in the microstructure, requires the summation of bainite, ferrite and retained austenite to be no more than 5%. In addition, the microalloy carbide and/or nitride that disperse tiny V, Nb, Ti etc. form have precipitation strengthening, grain refinement and consume the C in the martensite thereby improve the effects such as martensitic toughness, therefore, for reaching above-mentioned effect, the average size of the microalloy carbide and/or nitride that V, Nb, Ti etc. form need be controlled at 2~30 nm, and content is in 0.05~0.4% scope.

Based on the above alloy design and microstructural characteristics, the hot stamping formed component of the present invention exhibits ultra-high strength, good plasticity and toughness: a yield strength of 1200~1450 MPa, a tensile strength UTS of 1750~2100 MPa, an elongation of not less than 5%, and a fracture strain of not less than 0.22-(UTS-1700)/5000; preferably, a yield strength of 1230~1420 MPa, a tensile strength UTS of 1830~2030 MPa, and a fracture strain of not less than 0.23-(UTS-1750)/5000. After tempering, the hot stamping formed component of the present invention has the following properties: a yield strength of 1300-1600 MPa, a tensile strength UTS of 1700-2050 MPa, an elongation of not less than 5%, and a fracture strain of not less than 0.22; preferably, a yield strength of 1350-1550 MPa, a tensile strength of 1750-2000 MPa, and a fracture strain of not less than 0.23. The tempering treatment is as follows: keep warm at a temperature of 150-230°C for 30-80 min and then cool out of the furnace.

The present invention also provides a hot stamping steel plate for producing the above-mentioned hot stamped components, characterized in that the steel plate matrix of the hot stamping steel plate comprises, by mass percentage: 0.27%≤C≤0.35%, 0.70%≤Mn≤1.55%, 0.10%≤Si≤0.60%, 0.01%≤Cr≤0.70%, 0.001%≤B≤0.01%, 0.11%≤Al≤0.39%, N≤0.006%, 0.001%≤Nb+Ti≤0.1%, 0.05%≤V≤0.20%, 0.001%≤P≤0.100%, 0.0001%≤S≤0.100%, Fe≥95% and unavoidable impurities, wherein Mf of the steel plate matrix satisfies Mf ≥ 230 °C and the hardenability coefficient h satisfies h≥8.0.

Preferably, the steel sheet matrix of the hot stamping steel sheet further comprises, by mass percentage, at least one of: 0.01%≤W≤0.30%, 0.01%≤Mo≤0.30%, 0.01%≤Ni≤0.30%, 0.01% ≤Cu≤0.30%, 0.01%≤Co≤0.30%, 0.005%≤Sn≤0.30%, 0.005%≤Sb≤0.100%, 0.0001%≤Ca ≤0.01%, 0.0001%≤Mg≤0.01%, 0.0001%≤Zr≤0.01% and 0.0001%≤REM≤0.01%.

Preferably, 0.0001%≤W+Mo+Ni+Cu+Co+Sn+Sb+Ca+Mg+Zr+REM≤0.30%.

Preferably, the steel sheet matrix of the hot stamping steel sheet has a remainder of Fe and unavoidable impurities in terms of mass percentage.

Preferably, the hot stamping steel sheet is a pre-plated steel sheet, that is, the outer side of the steel sheet substrate is coated with an aluminum or aluminum alloy coating. In order to reduce the strength of the finished product and improve its processing performance, when the steel sheet is cooled to room temperature after coating, the microstructure of the steel sheet should be mainly ferrite and pearlite, and the formation of martensite phase should be avoided as much as possible, so that its proportion is less than 30%, preferably not more than 10%. As mentioned above, the formation of martensite during the processing of the steel sheet can be avoided as much as possible by lowering the upper limit of h. The organization of ferrite and pearlite makes the hardness of the steel sheet lower, and the average value of the 10-point Vickers hardness does not exceed 300 HV0.3, preferably, does not exceed 260 HV0.3. Preferably, the thickness of the aluminum or aluminum alloy pre-plating layer is 5~20 $\mu$m.

The manufacturing method of the above-mentioned pre-plated steel plate comprises:

a) before coating, heating the steel plate substrate having the above-mentioned composition to 740-870°C in an atmosphere of H2 and N2 with a H2 volume percentage of 2-12% and keeping the temperature for 30-300 s for annealing treatment, with a dew point of -30-5 °C; too high a dew point will cause serious oxidation on the surface of the steel plate, affecting the coating quality, while a low dew point will not bring about a beneficial surface decarburization effect;

b) Cool the annealed steel plate substrate to a predetermined temperature in the range of 630~670°C and keep it warm for a certain time $t$, and $t_{(F+P)} \leq t \leq 100$ s, where $t_{(F+P)}$ is the time for the steel plate substrate with the above composition to be heated to different annealing temperatures and then rapidly cooled to 630~670°C and kept warm to generate 70% ferrite and pearlite;

Under normal circumstances, the length of each stage of the coating and plating production line is fixed, and the residence time of the steel plate in each stage can be adjusted by adjusting the travel speed of the steel plate. On the one hand, in order to ensure that the steel plate has the structural characteristics of ferrite and pearlite as the main components and to ensure that the content of martensite is less than 30%, it is necessary to fully keep the steel plate warm before immersing it in the plating solution to allow sufficient ferrite and pearlite transformation to occur. The holding time t should not be less than the time $t_{(F+P)}$ for the steel plate substrate to be rapidly cooled to 630~670°C and kept warm to generate 70% ferrite and pearlite after being heated to different annealing temperatures. On the other hand, too low a steel plate travel speed will significantly reduce production efficiency and increase manufacturing costs. Therefore, the holding time t should not exceed 100 s, preferably not exceed 60 s, and more preferably not exceed 40 s.

c) immersing the steel plate substrate after the insulation in b) into a heated plating solution for hot dip plating, wherein the composition of the plating solution comprises, by mass percentage, 9-12% Si, 2-3% Fe and the remainder Al or Al alloy and inevitable impurities, and in this process, the plating solution temperature is maintained at 630-670 °C ; preferably, the plating solution temperature should not be higher than the insulation temperature in b) to prevent the plating solution temperature from decreasing after the steel plate is immersed in the plating solution, resulting in more Fe slag and affecting the quality of pre-coating;

d) after the steel plate substrate leaves the plating solution and before the plating solution on at least one surface of the steel plate substrate solidifies, removing excess plating solution on at least one surface by air knife blowing to control the thickness of the pre-plating layer on at least one surface; and

e) cooling the coated steel plate substrate to room temperature to obtain a pre-plated steel plate with an aluminum or aluminum alloy pre-plating layer.

By ensuring that the structural characteristics of the steel plate matrix are mainly ferrite and pearlite, the production method of the present invention improves production efficiency while reducing the occurrence of problems such as slab cracks, cold rolling cracking or strip breakage, and also improves the plate shape of the steel plate after cold rolling and coating, so that the difficulty of subsequent processing (such as trimming, punching, and leveling) of the annealed or coated finished product is also reduced.

The present invention will be described in more detail below with reference to exemplary embodiments. The following examples or experimental data are intended to illustrate the present invention by way of example, and it should be clear to those skilled in the art that the present invention is not limited to these examples or experimental data.

Prepare a steel plate with the composition shown in Table 1, and the corresponding manufacturing process is as follows:

The steel is prepared into an experimental steel plate by the following process, namely:

a) Steelmaking: According to the composition in Table 1, the steel is smelted by a vacuum induction furnace, an electric furnace or a converter, and a cast ingot is produced by continuous casting technology, or a thin slab continuous casting and rolling process is directly adopted;

b) Hot rolling: After heating the steel ingot to 1200°C and keeping it for 2 hours, it is hot rolled at 800°C~1200°C, and coiled at 600°C to form a hot-rolled steel coil, and the hot-rolled coil is pickled to remove the oxide scale generated during the hot rolling process;

c) Cold rolling: The pickled hot-rolled coil is cold rolled, and the cold rolling reduction is 30%~70% to obtain a cold-rolled steel coil with a thickness of 1.2 mm.

Table 1 Chemical composition of steel plate matrix (wt.%, balance Fe and other inevitable impurity elements)

| Sample No. | T1 | T2 | T3 | T4 | T5 | T6 | T7 | T8 | CT1 | CT2 | CT3 |
|---|---|---|---|---|---|---|---|---|---|---|---|
| C | 0.299 | 0.28 1 | 0.30 4 | 0.34 3 | 0.30 1 | 0.292 | 0.283 | 0.307 | 0.31 2 | 0.33 | 0.33 1 |
| Si | 0.27 | 0.28 | 0.27 | 0.22 | 0.27 | 0.26 | 0.27 | 0.26 | 0.33 | 0.15 | 0.32 |
| Mn | 1.45 | 1.24 | 1.08 | 0.92 | 1.42 | 1.43 | 1.29 | 1.02 | **1.79** | **1.60** | 1.52 |
| Cr | 0.05 | 0.25 | 0.12 | 0.15 | 0.06 | 0.07 | 0.29 | 0.15 | 0.26 | 0.24 | 0.45 |
| Al | 0.36 | 0.38 | 0.16 | 0.20 | 0.15 | 0.33 | 0.37 | 0.19 | **0.59** | **0.45** | 0.30 |
| Ti |  | 0.03 |  |  |  |  | 0.03 |  |  | 0.02 5 |  |
| Nb | 0.025 | 0.02 5 | 0.02 5 | 0.02 5 | 0.02 5 | 0.021 | 0.027 | 0.021 | 0.03 8 |  | 0.01 5 |
| B | 0.001 7 | 0.00 28 | 0.00 21 | 0.00 3 | 0.00 18 | 0.0020 | 0.0024 | 0.0022 | 0.00 25 | 0.00 25 | 0.00 28 |
| N | 0.004 1 | 0.00 32 | 0.00 22 | 0.00 26 | 0.00 35 | 0.0045 | 0.0030 | 0.0024 | 0.00 27 | 0.00 27 | 0.00 40 |
| V | 0.14 | 0.14 | 0.15 | 0.16 | 0.14 | 0.18 | 0.14 | 0.17 | 0.16 | 0.15 | 0.12 |
| P | 0.015 | 0.01 | 0.01 | 0.02 | 0.01 | 0.013 | 0.018 | 0.013 | 0.01 | 0.01 | 0.02 |
|  |  | 9 | 1 | 1 | 4 |  |  |  |  | 4 | 3 | 3 |
| S | 0.008 | 0.00 6 | 0.00 9 | 0.00 7 | 0.00 8 | 0.005 | 0.006 | 0.009 | 0.00 5 | 0.00 9 | 0.00 8 |
| other |  |  |  |  |  | Mo: 0.1 Sn: 0.01 Mg: 0.002 | Ni: 0.1 Sb: 0.006 Ca: 0.002 | Cu: 0.1 Co: 0.1 REM: 0.002 |  |  |  |
| Al/N | 87.80 | 118. 75 | 72.7 3 | 76.9 2 | **42.8 6** | 73.33 | 123.33 | 79.12 | 218. 52 | 166. 67 | 75.0 0 |
| h | 9.38 | 10.5 5 | 8.61 | 11.4 1 | 9.51 | 10.41 | 10.49 | 8.72 | 14.6 5 | 13.7 6 | 15.2 8 |
| Mf | 244 | 260 | 251 | 240 | 237 | 243 | 259 | 251 | **217** | **225** | **210** |

T1~T8 are embodiments of the present invention, and CT1~CT3 are comparative examples. Among them, h is calculated according to the formula in the present invention, and the Mf temperature is measured by using a DIL805A phase change instrument with reference to the standard "YB/T 5127-2018 Critical Point Determination of Steel". The specific test method is as follows:

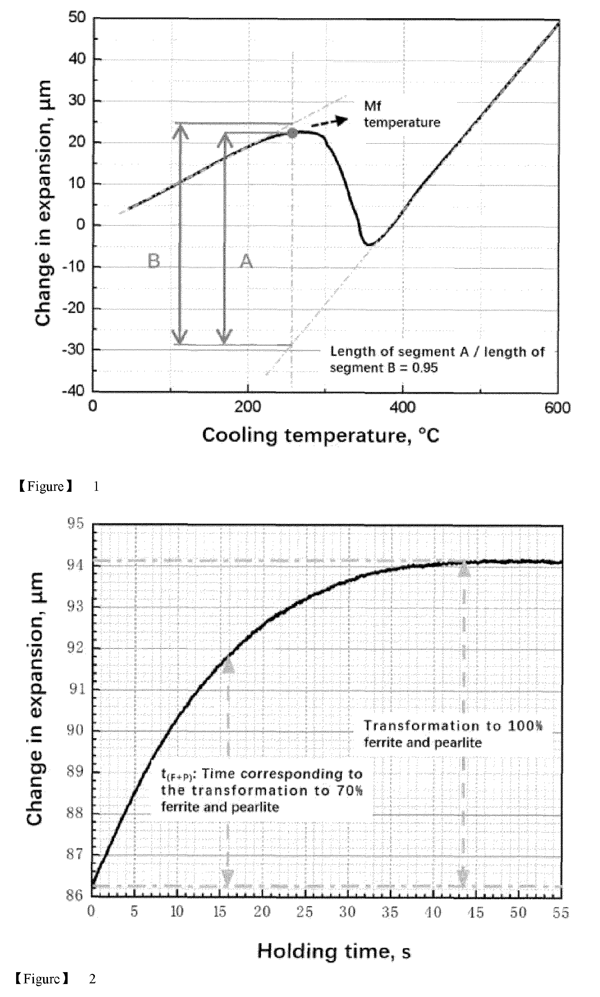

The sample is heated to 930°C at a heating rate of 10°C/s, kept warm for 300 s, and then cooled to below 100°C at a cooling rate of 30°C/s. The expansion deformation of the sample in the length direction during the entire cooling process is recorded, and the temperature corresponding to 95% martensitic phase transformation is obtained by the lever principle as the martensitic phase transformation end temperature Mf. Figure 1 exemplarily illustrates the Mf temperature test of the T1 experimental steel plate.

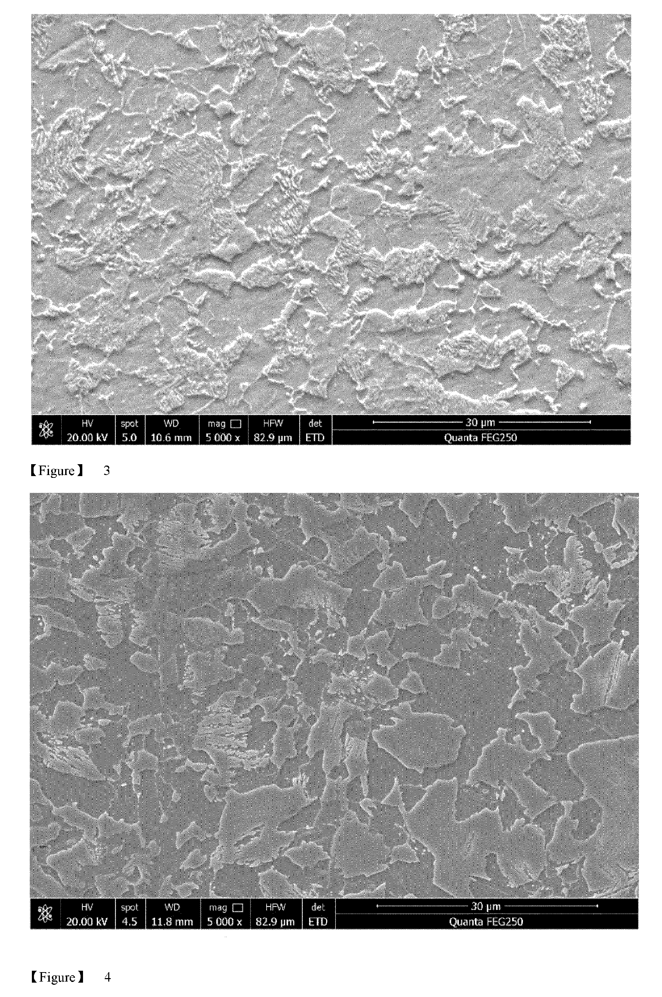

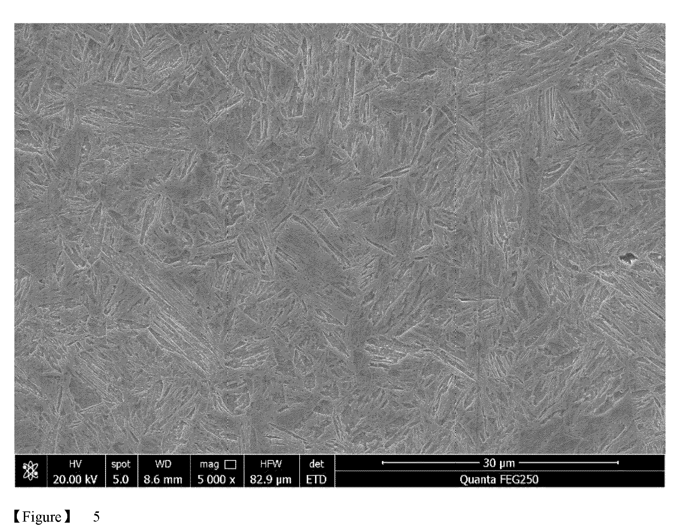

The above-mentioned method for manufacturing the pre-plated steel sheet is performed according to the parameters of Table 2 for T1~T8 and CT1~CT3, wherein the composition of the plating solution includes, by mass percentage: 9~12% Si, 2~3% Fe and the balance is Al and inevitable impurities, and the plating solution temperature is maintained at 630~670°C. Afterwards, the steel plate substrate of the pre-plated steel sheet is tested for Vickers hardness: the indenter load is 0.3 kg·F, and the test result is the average value of 10 points. The $t_{(F+P)}$ in Table 2 is obtained by simulating the corresponding method for manufacturing the pre-plated steel sheet using a DIL805A phase change instrument, and FIG. 2 exemsplarily illustrates the phase change expansion curve of the T1 pre-plated steel sheet during the insulation process when the annealing temperature is 820°C and the insulation temperature is 647°C and the calculation method of $t_{(F+P)}$. FIG. 3 and FIG. 4 show the microstructures of the steel plate substrates of the obtained T1 and CT1 pre-plated steel sheets.

Table 2 Manufacturing parameters and hardness of pre-plated steel sheet。

| Sample No. | Annealing temperature °C | dew point °C | Holding temperature °C | $t_{(F+P)}$ S | Keep warm time t s | Coating temperature °C | Average cooling rate after plating °C/s | HV0.3 10average |
|---|---|---|---|---|---|---|---|---|
| T1 | 820 | -10 | 647 | 16 | 35 | 645 | 25 | 227 |
| T2 | 810 | -20 | 655 | 13 | 35 | 650 | 25 | 254 |
| T3 | 790 | -28 | 652 | 10 | 35 | 650 | 25 | 232 |
| T4 | 830 | -5 | 664 | 17 | 35 | 650 | 25 | 239 |
| T5 | 845 | -10 | 647 | 16 | 35 | 655 | 25 | 275 |
| T6 | 820 | -11 | 647 | 18 | 35 | 645 | 25 | 230 |
| T7 | 810 | -18 | 655 | 13 | 35 | 650 | 25 | 249 |
| T8 | 790 | -30 | 655 | 11 | 35 | 650 | 25 | 236 |
| CT1 | 810 | -20 | 655 | **55** | 35 | 650 | 25 | 330 |
| CT2 | 810 | -20 | 655 | **37** | 35 | 650 | 25 | 310 |
| CT3 | 810 | -20 | 655 | **60** | 35 | 650 | 25 | 335 |

As shown in FIG3, the steel plate matrix of the T1 pre-plated steel plate is mainly composed of ferrite and pearlite, and the martensite content is less than 5%. The typical microstructure of T1 is applicable to the steel plate matrix of T2~T8 pre-plated steel plates. The microstructure corresponds to the hardness (227~275 HV0.3) of the steel plate matrix of the T1~T8 pre-plated steel plates. The reason why the steel plate matrix is mainly composed of ferrite and pearlite is that the holding time before hot dip plating is longer than $t_{(F+P)}$ of the steel plate, so there is enough time to generate a large amount of ferrite and pearlite, reducing or avoiding the generation of martensite.

In contrast, as shown in FIG4 , the steel plate matrix of the CT1 pre-plated steel plate is mainly composed of martensite and ferrite, and the martensite content exceeds 30%. Such a microstructure causes the hardness of the steel plate matrix to exceed 300 HV0.3. The same is true for the CT2~CT3 pre-plated steel plates. This is because the high alloy design of CT1~CT3 makes the steel plate have a higher hardenability, wherein the h value reaches 13.7~15.3, which makes it difficult to generate non-martensitic structures such as ferrite and pearlite during the annealing treatment of the coating process. Therefore, the $t_{(F+P)}$ time is relatively long, so that when the holding time is shorter than $t_{(F+P)}$, the amount of ferrite and pearlite generated before hot dip plating is insufficient, and then in the cooling process after hot dip plating, the cooling rate is difficult to control, and it is inevitable that more martensite will be generated, resulting in a high hardness of the steel plate matrix, which is not conducive to subsequent processing. In particular, CT3, all its alloying elements are within the scope of the present invention, but the hardness of the steel plate matrix of the pre-plated steel plate is relatively high. This is because the influence of hardenability h on $t_{(F+P)}$ in the processing of the pre-plated steel plate was not considered when designing the alloy ratio, so the formation of martensite during the processing cannot be effectively controlled. In addition, due to the high alloy design, the Mf temperature of CT1~CT3 is generally low, and there are more hard and brittle twin martensite in the generated martensite, which further reduces the processing performance of the steel plate.

Therefore, when manufacturing the pre-plated steel sheet, it is necessary to combine the martensitic phase transformation properties of the material and reasonably set the holding time t before hot dip plating so that $t_{(F+P)} \leq t \leq 100$ s, thereby ensuring production efficiency and minimizing the formation of martensite to facilitate subsequent processing. $t_{(F+P)}$ is preferably not more than 35 s, more preferably, $t_{(F+P)}$ is not more than 20 s and t is not more than 60 s.

Hot Stamping Flat Plate Simulation

Cold rolled sheets T1* and T4* (i.e., without pre-plating), T1~T8 pre-plated steel sheets, and CT1~CT3 pre-plated steel sheets were subjected to hot stamping flat plate simulation: heated to 920°C in a heating furnace for 300 s, then the sample was transferred to a press for 8~12 s, and after hot stamping, cooled to below 200°C at a cooling rate of 40°C/s to obtain the corresponding hot stamping formed components. In addition, in order to simulate the coating baking treatment of automotive parts, the above hot stamping formed components were tempered, and the tempering process was set to 170°C for 20 min with reference to the actual baking process.

Measurement of the thickness of the outer layer of hot stamped components

For T1~T8 and CT1~CT3 hot stamped components formed by hot stamping of pre-plated steel sheets, they include a steel sheet substrate and an outer layer from the inside to the outside, and the outer layer is a coating composed of an interdiffusion layer and an Fe and Al intermetallic compound layer outside the interdiffusion layer. The microstructure of the steel sheet substrate of each component was observed under a metallographic microscope and a scanning electron microscope, and the coating was subjected to EDS line scanning to obtain the change in the Fe content therein, thereby measuring the thickness of the entire coating and the thickness of the interdiffusion layer, wherein the thickness of the interdiffusion layer was measured with a Fe content of 70% as the boundary between the interdiffusion layer and the Fe and Al intermetallic compound layer.

For T1* and T4* hot stamped components formed by hot stamping of cold rolled sheets, they include a steel plate matrix and an outer layer from the inside to the outside, the outer layer is a decarburized layer, and its thickness is defined as: from the surface of the hot stamping component to the position where the hardness is 50% of the hardness at the center of the steel plate matrix. The measurement method is as follows:

1) Use a 0.3 kg·F indenter load to measure the center of the steel plate matrix of the hot stamping component;
2) After 1), reduce the indenter load to 0.03 kg·F, and gradually measure the hardness from the surface of the steel plate inward. When the measured hardness is 50% of the hardness measured in 1), record the position of the hardness point, and the distance from the point to the component surface is used as the thickness of the decarburized layer.

To reduce the measurement error, all results are averaged by 10 measurements.
The outer layer thickness and structural tests of all the above components are shown in Table 3.

Performance test of hot stamping formed components

According to the room temperature tensile standard GBT228.1 and the three-point bending standard VDA-238, the obtained untempered and tempered hot stamping formed components were tested for tensile strength, elongation and maximum bending angle. In order to reduce the measurement error, the final test results are the average of the three groups of test results.
The bending fracture strain test method is as follows: (1) Determine the VDA bending angle $\alpha$peak of the component specimen by a static three-point bending test; (2) Based on the experimental results, select at least three groups of interruption bending angles $\alpha_L$ (i.e., the bending angle of the component specimen under load) for interruption bending test to ensure that $\alpha_L \geq 50\% \alpha_{peak}$; (3) Stop loading when the component specimen is bent to $\alpha_L$, and measure the bending angle $\alpha_{UL}$ of the component specimen under unloading; (4) Place the unloaded component specimen under an optical microscope, and measure the inner and outer surface radii $R_i$ and $R_o$ of the most severe deformation zone; (5) Calculate the equivalent (plastic) strain $\varepsilon$ of the outer surface of the most severe deformation zone of the component specimen under unloading conditions of different $\alpha_{UL}$ according to equation (1), that is, the equivalent strain of the outer surface of the most severe deformation zone of the component specimen when the component specimen is bent to $\alpha_L$,

**EP 4 613 900 A1**

thereby establishing the $\varepsilon$-$\alpha_L$ relationship; (6) According to the fitting results, the bending fracture strain $\varepsilon$ of the component specimen (i.e., $\varepsilon$ when $\alpha_L$ is equal to $\alpha_{peak}$) is obtained by the extrapolation method:

$$\varepsilon = \frac{2}{\sqrt{3}} \cdot \ln \sqrt{\frac{R_o}{R_i}} \qquad (1)$$

The final results of the final microstructure, tensile properties and VDA bending properties of the hot stamping formed components without tempering are shown in Table 3.

Table 3: Microstructure and performance test results of hot stamping parts without tempering。

| Sam ple number | Initial surface state | Outer layer characteristic and thickness | Microstructure (area percentage) | Tensile properties | | | Static three-point bending performance | |
|---|---|---|---|---|---|---|---|---|
| | | | | Yield strengt h MPa | Tensil e stren gth MPa | Elo ngat ion % | Maxi mum bendi ng angle ° | Fractu ring strain |
| T1* | No pre-plating | Decarburized layer 4 $\mu$m | M>97% P<0.3% | 1287 | 1895 | 7.2 | 53.2 | 0.237 |
| T4* | No pre-plating | Decarburized layer 4 $\mu$m | M>97% P<0.3% | 1307 | 1925 | 5.9 | 47.5 | 0.197 |
| T1 | T-A: 12 $\mu$m | T-B: 18 $\mu$m T-D: 6 $\mu$m | M>97% P<0.3% | 1243 | 1922 | 6.7 | 49.9 | 0.215 |
| T2 | T-A: 8 $\mu$m | T-B:12 $\mu$m T-D: 10 $\mu$m | M>97% P<0.3% | 1311 | 1855 | 6.9 | 51.8 | 0.232 |
| T3 | T-A: 12 $\mu$m | T-B: 18 $\mu$m T-D: 6 $\mu$m | M>97% P<0.3% | 1344 | 1873 | 6.3 | 48.6 | 0.206 |
| T4 | T-A: 11 $\mu$m | T-B: 16 $\mu$m T-D: 7 $\mu$m | M>97% P<0.3% | 1383 | 2026 | 7.2 | 45.7 | 0.185 |
| T5 | T-A: 13 $\mu$m | T-B: 20 $\mu$m T-D: 7 $\mu$m | Ferrite<5% M>95% P<0.3% | 1202 | 1897 | 6.3 | 46.5 | 0.191 |
| T6 | T-A: 12 $\mu$m | T-B: 18 $\mu$m T-D: 6 $\mu$m | M>97% P<0.3% | 1255 | 1931 | 6.5 | 50.1 | 0.217 |
| T7 | T-A: 9 $\mu$m | T-B: 12 $\mu$m T-D: 9 $\mu$m | M>97% P<0.3% | 1302 | 1870 | 7.1 | 51.2 | 0.231 |
| T8 | T-A: 13 $\mu$m | T-B: 18 $\mu$m T-D: 7 $\mu$m | M>97% P<0.3% | 1340 | 1869 | 6.6 | 49.6 | 0.216 |
| CT1 | T-A: 10 $\mu$m | T-B: 15 $\mu$m T-D: 9 $\mu$m | M>97% P<0.3% Twinned mar-tensite | 1236 | 1949 | 5.3 | **41.2** | **0.161** |
| CT2 | T-A: 25 $\mu$m | T-B: 35 $\mu$m T-D: 4 $\mu$m | M>97% P<0.3% Twinned mar-tensite | 1302 | 1937 | 6.1 | **43.1** | **0.175** |

17

(continued)

| Sam ple number | Initial surface state | Outer layer characteristic and thickness | Microstructure (area percentage) | Tensile properties | | | Static three-point bending performance | |
|---|---|---|---|---|---|---|---|---|
| | | | | Yield strengt h MPa | Tensil e stren gth MPa | Elo ngat ion % | Maxi mum bendi ng angle ° | Fractu ring strain |
| CT3 | T-A: 20 μm | T-B: 28μm <br> T-D: 7 μm | M>97% <br> P<0.3% <br> Twinned mar-tensite | 1327 | 1970 | 4.7 | **40.5** | **0.156** |

Note: T-A refers to the thickness of Al pre-plating layer; T-B refers to the thickness of the coating layer; T-D refers to the thickness of the interdiffusion layer; M refers to martensite; P refers to microalloy carbide.

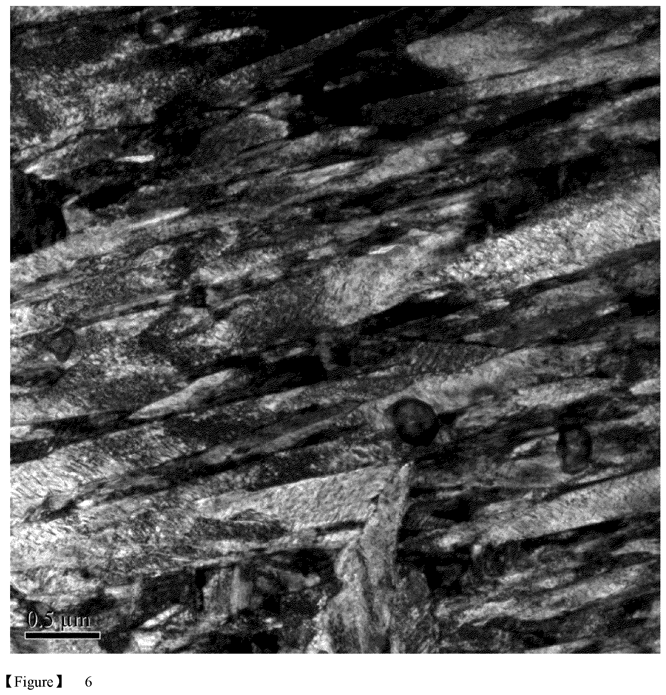

As shown in Table 3, the microstructures of all hot stamped components are mainly martensite (accounting for no less than 95%), and the microalloy carbide is less than 0.3%. In particular, the martensite content in the microstructures of T1~T4, T6~T8 and CT1~CT3 components reaches more than 97%, which is almost a full martensite structure. The nearly full martensite structure benefits from the sufficient hardenability of each component, ensuring high strength. As an example only, the typical microstructure of the T1 hot stamping component of the present invention is shown in Figures 5 and 6. It can be seen that the microstructure of the component of the present invention is mainly dislocation martensite with good toughness, and no twin martensite is generated.

The T1~T8, T1* and T4* components of the present invention have a yield strength of 1200~1400 MPa and a tensile strength of 1850~2030 MPa, and the maximum bending angle reaches 45~53°, the fracture strain is 0.18~0.24, and has both high strength and high toughness.

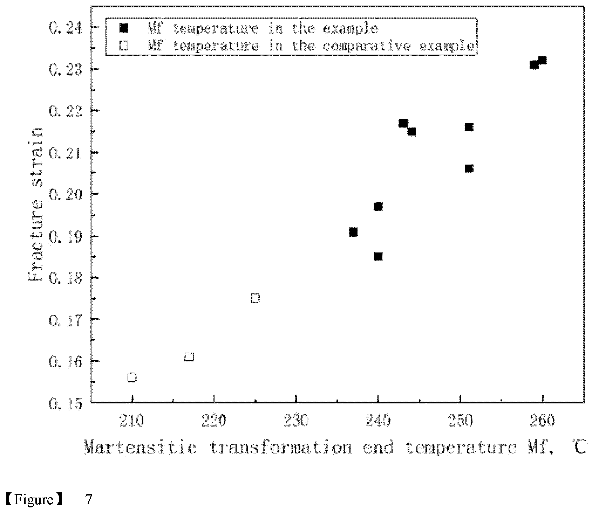

The components of the present invention have both high strength and high toughness because the present invention obtains an Mf of not less than 230°C under the condition of satisfying the hardenability h≥8.0 through a reasonable alloy element ratio, such as the Mf of each embodiment T1~T8 reaches 235~260°C. Therefore, after thermal deformation, at least 95% of the martensite structure can be guaranteed during the cooling process of the mold, and no hard and brittle twin martensite is generated, so that the T1~T8 components of the present invention show good toughness under high strength. Figure 7 shows the relationship between the Mf temperature and the fracture strain of all the obtained untempered hot stamping parts. It can be seen that with the increase of the Mf temperature, the toughness shows an increasing trend. Therefore, in order to ensure that the fracture strain is not less than 0.18, the Mf temperature of the present invention needs to be not less than 230°C, and preferably the Mf temperature is not less than 235°C.

In contrast, the maximum bending angle of CT1-CT3 components did not reach 45°, and the fracture strain was lower than 0.18, which failed to have both high strength and high toughness, while the yield strength of CT1-CT3 components was 1200-1350 MPa and the tensile strength of 1900-2000 MPa.

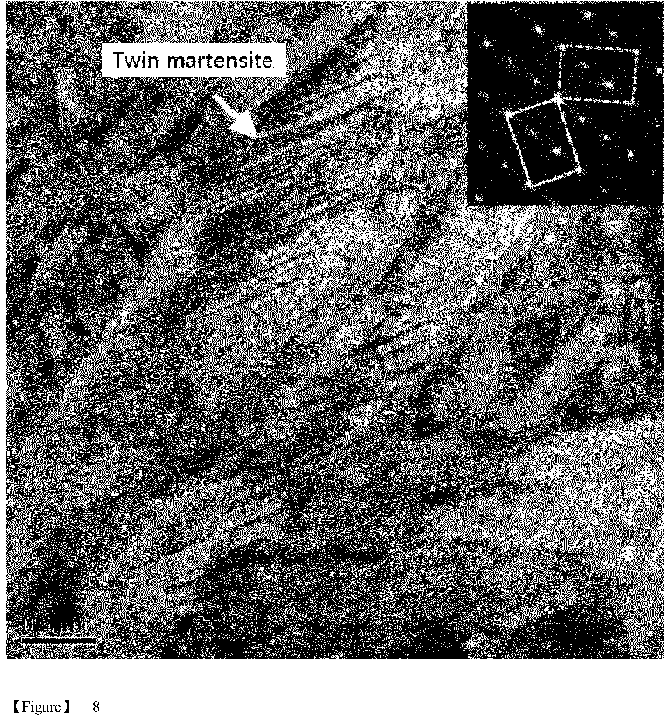

Thanks to the high hardenability, CT1-CT3 components obtained sufficient high strength, but the excessively large h value and low Mf temperature caused by their alloy design will make CT1-CT3 components have more hard and brittle twin martensite, which is not conducive to the components obtaining sufficient toughness. For example, the Mf temperatures of CT1 and CT2 are only 217°C and 225 °C, because the Mn contents of the two are as high as 1.79% and 1.60% respectively (exceeding the composition range of the present invention), so that even the high Al contents of 0.59% and 0.45% (exceeding the composition range of the present invention) are not enough to compensate for the reduction of Mf by Mn. In addition, although the CT3 composition is within the scope of the present invention, its element ratio is unreasonable, resulting in h as high as 15.28 and Mf only 210°C. As an example only, the typical microstructure of the CT1 component is shown in Figure 8, which shows twinned martensite, which corresponds to the expected effect of low Mf. Therefore, compared with the T1-T8 components of the present invention, although the CT1 component has high strength, its toughness performance is seriously insufficient.

By comparing T1~T8 components and CT1~CT3 components, in order to ensure that the desired toughness can be obtained at high strength, the present invention requires that on the basis of each element satisfying the composition range of the present invention, each alloy element must be reasonably proportioned so that Mf≥230°C and h≥8.0. Further, as shown in Table 3, h≥8.0 is sufficient to obtain a martensitic structure of not less than 95%. Taking into account manufacturability and economic benefits, the present invention preferably selects the hardenability coefficient to be 8.3 ≤h≤13.5, more preferably, 8.5≤h≤11.5, such as T1~T8 components.

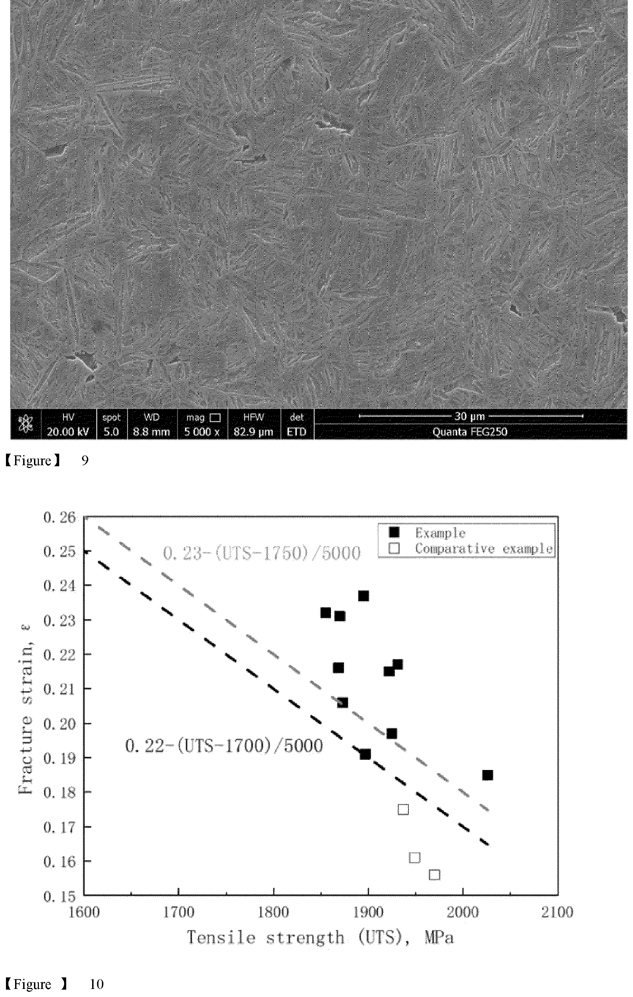

Further, as an example only, FIG. 9 shows a typical microstructure of an untempered T5 hot stamping formed component of the present invention. By comparing FIG. 5 and FIG. 9, it can be seen that the microstructure of the T1 component is a typical lath-shaped dislocation martensite structure, and the martensite ratio is above 97%. In contrast, a small amount of prior eutectoid ferrite is present in the microstructure of the T5 component. Furthermore, compared with the T1 component, the strength and toughness of the T5 component are both low under similar compositions. This is mainly due to the fact that compared with the T1 component, the Al/N of the T5 component is low and fails to reach 65, resulting in N not being fully combined with Al, but there is a part of N combined with B, causing the effect of B in improving hardenability not to be fully exerted, resulting in the generation of a small amount of ferrite, which is not conducive to ensuring high strength and good toughness. In contrast, the T1 component adds more Al (0.36%) to make Al/N ≥ 65 to promote the combination of Al and N, thereby ensuring the role of B in the steel plate in improving hardenability to avoid the formation of ferrite, and even in the presence of Ti, it can avoid the formation of large-sized TiN particles during hot stamping, thereby further improving the strength and toughness of the component. Therefore, in order to ensure a better N fixation effect and thus ensure higher strength and toughness, the present invention preferably requires Al/N ≥ 65 when 0.11% ≤ Al ≤ 0.39%.

In addition, FIG. 10 shows a relationship diagram between the fracture strain and tensile strength of all the obtained untempered hot stamping formed components, wherein the fracture strain of the T1~T8 and T1* and T4* components of the present invention is not less than 0.22-(UTS-1700)/5000, and further, if the Al/N ratio is not less than 65, the fracture strain of the embodiments of the present invention is not less than 0.23-(UTS-1750)/5000.

The final results of the tensile properties and VDA bending properties of the hot stamping formed components after tempering are shown in Table 4. It can be seen from Table 4 that after tempering, the T1~T8, T1* and T4* components of the present invention have a maximum bending angle of 51~58° and a fracture strain of 0.22~0.27 under the condition of having a yield strength of 1320~1520 MPa and a tensile strength of 1780~1940 MPa, and have both high strength and high toughness.

In contrast, after tempering, the maximum bending angle of CT1-CT3 components reached 47-50° and the fracture strain was 0.19-0.21 under the condition of yield strength of 1350-1450 MPa and tensile strength of 1800-1900 MPa. Although the tempering treatment releases the internal stress of CT1-CT3 components and improves their toughness to a certain extent, compared with the embodiments of the present invention, CT1-CT3 components fail to have both high strength and high toughness.

Table 4 Performance test results of hot stamped components after tempering。

| Sample number | Tensile properties | | | Static three-point bending properties | |
|---|---|---|---|---|---|
| | Yield strength MPa | Tensile strength MPa | Elongati on % | Maximum bending angle ° | Fracturing strain |
| T1* | 1389 | 1837 | 7 | 57.4 | 0.270 |
| T4* | 1420 | 1854 | 6.3 | 53.1 | 0.235 |
| T1 | 1361 | 1843 | 6.9 | 55.6 | 0.249 |
| T2 | 1450 | 1786 | 7.1 | 56.9 | 0.262 |
| T3 | 1473 | 1805 | 6.7 | 54.8 | 0.245 |
| T4 | 1518 | 1940 | 7 | 50.9 | 0.223 |
| T5 | 1320 | 1815 | 6.6 | 51.4 | 0.230 |
| T6 | 1349 | 1850 | 6.8 | 56.1 | 0.259 |
| T7 | 1412 | 1820 | 7.5 | 57.2 | 0.264 |
| T8 | 1405 | 1801 | 6.9 | 54.2 | 0.244 |
| CT1 | 1354 | 1862 | 5.8 | 48.3 | 0.201 |
| CT2 | 1399 | 1841 | 6.7 | 49.5 | 0.21 |
| CT3 | 1435 | 1870 | 5.8 | 47.1 | 0.195 |

Delayed cracking test

The test method refers to the four-point bending loading test specified in ISO 7539-2: 1995. Five samples of hot stamped components T1~T8 and CT1~CT3 that have not been tempered were taken for parallel experiments. The solution was a 0.1 mol/N hydrochloric acid solution. The load was applied according to 70~110% of the yield strength of the sample. The maximum stress without cracking for 120 hours, that is, the ultimate stress and its ratio to the yield strength were recorded. The results are listed in Table 5.

Table 5 Delayed cracking results of each hot stamping component that has not been tempered。

|  | Acid pH value | Yield strength, MPa | Ultimate stress, MPa | Ultimate stress /yield strength |
|---|---|---|---|---|
| T1 | 1.0±0.1 | 1243 | 850 | 68% |
| T2 | 1.0±0.1 | 1311 | 950 | 72% |
| T3 | 1.0±0.1 | 1344 | 850 | 63% |
| T4 | 1.0±0.1 | 1383 | 800 | 58% |
| T5 | 1.0±0.1 | 1202 | 750 | 62% |
| T6 | 1.0±0.1 | 1255 | 850 | 68% |
| T7 | 1.0±0.1 | 1302 | 950 | 73% |
| T8 | 1.0±0.1 | 1340 | 850 | 63% |
| CT1 | 1.0±0.1 | 1236 | 450 | 36% |
| CT2 | 1.0±0.1 | 1302 | 550 | 42% |
| CT3 | 1.0±0.1 | 1327 | 650 | 49% |

As shown in Table 5, even without tempering treatment, the 120-hour non-cracking limit stress of T1~T8 components reaches more than 750 MPa, and the ratio of limit stress to yield strength exceeds 55%, showing excellent delayed cracking resistance. This is because T1~T8 components have a high Mf temperature and a suitable h value under the condition of satisfying hardenability, so in the cooling process after thermal deformation, not only can a nearly full martensite structure be achieved, but also the generation of hard and brittle twin martensite can be suppressed, thereby improving the martensite toughness as a whole, and then improving the delayed cracking resistance. In particular, the Mf of T1~T3 and T6~T8 is higher than 240°C, so that the ratio of limit stress to yield strength exceeds 60%, further improving the delayed cracking resistance of the component. Further, the Mf of T2 and T7 is higher than 255 °C, so that the ratio of limit stress to yield strength exceeds 70%, further improving the delayed cracking resistance of the component.

In contrast, the ultimate stress of CT1-CT3 components is relatively low, and the ratio of ultimate stress to yield strength is less than 50%, and the delayed cracking performance is significantly worse than that of the embodiment of the present invention.

In summary, the hot stamping formed components of the present invention show comprehensive superiority in overall performance, achieving high strength, high toughness and improved delayed cracking resistance.

The above embodiments and experimental data are intended to illustrate the present invention by way of example only. It should be clear to those skilled in the art that the present invention is not limited to these embodiments, and various changes may be made without departing from the scope of protection of the present invention.

**Claims**

1. A steel sheet for hot stamping, wherein the steel sheet matrix of the steel sheet for hot stamping comprises, by mass percentage, $0.27\% \leq C \leq 0.35\%$, $0.70\% \leq Mn \leq 1.55\%$, $0.10\% \leq Si \leq 0.60\%$, $0.01\% \leq Cr \leq 0.70\%$, $0.001\% \leq B \leq 0.01\%$, $0.11\% \leq Al \leq 0.39\%$, $N \leq 0.006\%$, $0.001\% \leq Nb+Ti \leq 0.1\%$, $0.05\% \leq V \leq 0.20\%$, $0.001\% \leq P \leq 0.100\%$, $0.0001\% \leq S \leq 0.100\%$,

   $Fe \geq 95\%$ and unavoidable impurities,
   wherein, the martensitic transformation end temperature Mf of the steel plate matrix satisfies: $Mf \geq 230°C$; and the hardenability coefficient h of the steel plate matrix is calculated by the following formula and satisfies $h \geq 8.0$:

   $$h=[6.9[Mn]^2+3.2[Si]+22.6[Cr]^2+23.1[Mo]+(13.0[Cr]+2.5[Mo]+9.7)[Ni]+7.9[B]\times103+2.5]\times[C];$$

   wherein [X] is the mass percentage of the alloying element.

2. The hot stamping steel sheet according to claim 1, further comprises, in terms of mass percentage, at least one of: $0.01\% \leq W \leq 0.30\%$, $0.01\% \leq Mo \leq 0.30\%$, $0.01\% \leq Ni \leq 0.30\%$, $0.01\% \leq Cu \leq 0.30\%$, $0.01\% \leq Co \leq 0.30\%$, $0.005\% \leq Sn \leq 0.30\%$, $0.005\% \leq Sb \leq 0.100\%$, $0.0001\% \leq Ca \leq 0.01\%$, $0.0001\% \leq Mg \leq 0.01\%$, $0.0001\% \leq Zr \leq 0.01\%$ and $0.0001\% \leq REM \leq 0.01\%$.

3. The hot stamping steel sheet according to claim 2, wherein 0.0001% ≤ W+Mo+Ni+Cu+Co+Sn+Sb+Ca+Mg+Zr+REM≤0.30%.

4. The hot stamping steel sheet according to claim 1, wherein the steel sheet matrix of the hot stamping steel sheet has a balance of Fe and inevitable impurities in terms of mass percentage.

5. The hot stamping steel sheet according to claim 3, wherein the steel sheet matrix of the hot stamping steel sheet has a balance of Fe and inevitable impurities in terms of mass percentage.

6. The hot stamping steel sheet according to claim 1 or 4, wherein Mf ≥ 235°C and/or 8.3 ≤ h ≤ 13.5.

7. The hot stamping steel sheet according to claim 6, wherein 8.4 ≤ h ≤ 12.5.

8. The hot stamping steel sheet according to claim 7, wherein 8.5 ≤ h ≤ 11.5.

9. The hot stamping steel sheet according to claim 1 or 4, wherein 0.28% ≤ C ≤ 0.345% and/or 0.15% ≤ Al ≤ 0.38%.

10. The hot stamping steel sheet according to claim 9, wherein 0.28%≤C≤0.31%.

11. The hot stamping steel sheet according to claim 1 or 4, wherein Al/N≥65.

12. The hot stamping steel sheet according to claim 1 or 4, wherein 0.80%≤Mn≤1.45% and/or Si+Cr≤0.70%.

13. The hot stamping steel sheet according to claim 1 or 4, wherein 0.10%≤Si≤0.40%; 0.01%≤Cr ≤0.40% and Si+Cr≤0.50%.

14. The hot stamping steel sheet according to claim 1 or 4, wherein 0.02%≤Nb+Ti≤0.06% and/or 0.05%≤V≤0.20%.

15. The hot stamping steel sheet according to claim 1 or 4, wherein the average value of the 10-point Vickers hardness of the steel sheet substrate does not exceed 300 HV0.3.

16. The hot stamping steel sheet according to claim 1 or 4, wherein the microstructure of the steel sheet substrate comprises, in terms of area percentage: martensite + bainite ≤ 30%, and the rest is ferrite + pearlite.

17. The hot stamping steel sheet according to claim 1 or 4, wherein a 5-20 μm aluminum alloy pre-plating layer is coated on at least one surface of the steel sheet substrate.

18. A hot stamping formed component, which consists of a steel plate matrix and an outer layer from the inside to the outside, wherein the steel plate matrix contains, by mass percentage: 0.27%≤C≤ 0.35%, 0.70%≤Mn≤1.55%, 0.10%≤Si≤0.60%, 0.01%≤Cr≤0.70%, 0.001%≤B≤0.01%, 0.11% ≤Al≤0.39%, N≤0.006%, 0.001%≤Nb+Ti≤0.1%, 0.05%≤V≤0.20%, 0.001%≤P≤0.100%, 0.0001 %≤S≤0.100%, Fe≥95% and unavoidable impurities,

wherein, the martensitic transformation end temperature Mf of the steel plate matrix satisfies: Mf≥ 230°C; and
The hardenability coefficient h of the steel plate matrix is calculated by the following formula and satisfies h≥8.0:

$$h=[6.9[Mn]^2+3.2[Si]+22.6[Cr]^2+23.1[Mo]+(13.0[Cr]+2.5[Mo]+9.7)[Ni]+7.9[B]\times103+2.5]\times[C];$$

wherein [X] is the mass percentage of the alloying element.

19. The hot stamping formed component according to claim 18, wherein the steel plate matrix further comprises, by mass percentage, at least one of: 0.01%≤W≤0.30%, 0.01%≤Mo≤0.30%, 0.01%≤ Ni≤0.30%, 0.01%≤Cu≤0.30%, 0.01%≤Co≤0.30%, 0.005%≤Sn≤0.30%, 0.005%≤Sb≤ 0.100%, 0.0001%≤Ca≤0.01%, 0.0001%≤Mg≤0.01%, 0.0001%≤Zr≤0.01% and 0.0001%≤ REM≤0.01%.

20. The hot stamping steel sheet according to claim 19 , wherein 0.0001% ≤ W+Mo+Ni+Cu+Co+Sn+Sb+Ca+Mg+Zr+REM≤0.30%.

21. The hot stamping steel sheet according to claim 18, wherein the steel sheet matrix of the hot stamping component has a remainder of Fe and inevitable impurities in terms of mass percentage.

22. The hot stamping steel sheet according to claim 20, wherein the steel sheet matrix of the hot stamping component has a remainder of Fe and inevitable impurities in terms of mass percentage.

23. The hot stamping component according to claim 18 or 21, which is made of the hot stamping steel sheet according to any one of claims 2 to 16.

24. The hot stamped component according to claim 23, wherein the outer layer of the hot stamped component is composed of a decarburized layer of 1 to 20 $\mu$m, and the C content in the decarburized layer does not exceed 50% of the C content at the center of the steel sheet substrate.

25. The hot stamping component according to claim 18 or 21, which is made of the hot stamping steel sheet according to claim 17, wherein the outer layer of the hot stamping component is a coating composed of a 4-15 $\mu$m interdiffusion layer and an Fe and Al intermetallic compound layer outside the interdiffusion layer, wherein the Fe content of the interdiffusion layer is greater than or equal to 70% by mass percentage.

26. The hot stamping component according to claim 18 or 21, wherein the microstructure of the steel sheet matrix is composed of less than 4% bainite, less than 3% austenite, less than 3% ferrite, and the remainder is dislocation martensite and less than 0.4% of microalloy carbides and/or nitrides formed by V, Nb or Ti.

27. The hot stamped component according to claim 26, wherein the sum of bainite + austenite + ferrite does not exceed 5%.

28. The hot stamped component according to claim 26, wherein the microstructure of the steel sheet matrix contains, by area percentage, 0.05-0.3% of microalloy carbides and/or nitrides formed by V, Nb or Ti, with an average size of 2-20 nm.

29. The hot stamping component according to claim 18 or 21, wherein the yield strength of the hot stamping component is 1200~1450 MPa, the tensile strength is 1750~2100 MPa, the elongation is $\geq$5%, and the fracture strain is $\geq$0.22-(UTS-1700)/5000.

30. The hot stamping component according to claim 18 or 21, wherein the yield strength of the hot stamping component is 1300~1600 MPa, the tensile strength is 1700~2050 MPa, the elongation is $\geq$5%, and the fracture strain is $\geq$0.22.

31. The hot stamping component according to claim 18 or 21, wherein Al/N $\geq$ 65, the yield strength of the hot stamping component is 1230-1420 MPa, the tensile strength is 1830-2030 MPa, the elongation is $\geq$ 5%, and the fracture strain is $\geq$ 0.23-(UTS-1750)/5000.

32. A method for producing a steel plate for hot stamping, wherein the steel plate matrix of the steel plate for hot stamping comprises, by mass percentage: 0.27%$\leq$C$\leq$0.35%, 0.70%$\leq$Mn$\leq$1.55%, 0.10%$\leq$Si$\leq$0.60%, 0.01%$\leq$Cr$\leq$0.70%, 0.001%$\leq$B$\leq$0.01%, 0.11%$\leq$Al$\leq$0.39%, N$\leq$0.006%, 0.001%$\leq$Nb+Ti$\leq$0.1%, 0.05%$\leq$V$\leq$0.20%, 0.001%$\leq$P$\leq$0.100%, 0.000 1%$\leq$S$\leq$0.100%, Fe$\geq$ 95% and unavoidable impurities,

Wherein, the martensitic transformation end temperature Mf of the steel plate matrix satisfies: Mf$\geq$ 230°C; and The hardenability coefficient h of the steel plate matrix is calculated by the following formula and satisfies h$\geq$8.0:

$$h=[6.9[Mn]^2+3.2[Si]+22.6[Cr]^2+23.1[Mo]+(13.0[Cr]+2.5[Mo]+9.7)[Ni]+7.9[B]\times103+2.5]\times[C];$$

Wherein [X] is the mass percentage of the alloying element,
The method comprises:

a) annealing treatment: before coating, the steel plate substrate is heated to a temperature in the range of 740-870°C and kept warm for 30-300 s, and the dew point is in the range of -30-5 °C;
b) heat preservation treatment: the annealed steel plate substrate is cooled to a predetermined temperature in the range of 630-670°C and kept warm for a time t, and t(F+P)$\leq$t$\leq$100 s, wherein t(F+P) is the time required for the steel plate substrate to generate 70% ferrite and pearlite when it is heated to different annealing temperatures and then cooled to 630-670°C;

c) hot dip plating treatment: the steel plate substrate that has been kept warm in b) is immersed in a heated plating solution for hot dip plating, wherein the composition of the plating solution comprises, by mass percentage: 9-12% Si, 2-3% Fe and the balance is Al or Al alloy and inevitable impurities, during which the plating solution temperature is maintained at a temperature within the range of 630-670°C;

d) after the steel plate substrate leaves the plating solution and before the plating solution on at least one surface of the steel plate substrate solidifies, the excess plating solution on at least one surface is removed by air knife blowing to control the thickness of the pre-plating layer on at least one surface; and

e) the steel plate substrate is cooled to room temperature to obtain a pre-plated steel plate with an aluminum or aluminum alloy pre-plating layer.

33. The method for producing a hot stamping steel sheet according to claim 32, wherein the steel sheet matrix of the hot stamping steel sheet further comprises, by mass percentage: $0.01\% \leq W \leq 0.30\%$, $0.01\% \leq Mo \leq 0.30\%$, $0.01\% \leq Ni \leq 0.30\%$, $0.01\% \leq Cu \leq 0.30\%$, $0.01\% \leq Co \leq 0.30\%$, $0.005\% \leq Sn \leq 0.30\%$, $0.005\% \leq Sb \leq 0.100\%$, $0.0001\% \leq Ca \leq 0.01\%$, At least one of $0.0001\% \leq Mg \leq 0.01\%$, $0.0001\% \leq Zr \leq 0.01\%$ and $0.0001\% \leq REM \leq 0.01\%$, wherein: $0.0001\% \leq W+Mo+Ni+Cu+Co+Sn+Sb+Ca+Mg+Zr+REM \leq 0.30\%$.

34. A method for producing a hot stamping steel sheet according to claim 32 or 33, wherein the steel sheet matrix of the hot stamping steel sheet has a remainder of Fe and unavoidable impurities in terms of mass percentage.

35. A method for producing a hot stamping steel sheet according to claim 32 or 33, wherein $t_{(F+P)} \leq t \leq 60$ s and/or $t_{(F+P)} \leq 35$ s.

36. A method for producing a hot stamping steel sheet according to claim 32 or 33, wherein $t_{(F+P)} \leq t \leq 40$ s and/or $t_{(F+P)} \leq 20$ s.

Length of segment A / length of segment B = 0.95

【Figure】 1

Transformation to 100% ferrite and pearlite

$t_{(F+P)}$: Time corresponding to the transformation to 70% ferrite and pearlite

【Figure】 2

| 🔬 | HV | spot | WD | mag ☐ | HFW | det | ⊢———————— 30 µm ————————⊣ |
| | 20.00 kV | 5.0 | 10.6 mm | 5 000 x | 82.9 µm | ETD | Quanta FEG250 |

【Figure】 3

| 🔬 | HV | spot | WD | mag ☐ | HFW | det | ⊢———————— 30 µm ————————⊣ |
| | 20.00 kV | 4.5 | 11.8 mm | 5 000 x | 82.9 µm | ETD | Quanta FEG250 |

【Figure】 4

| HV | spot | WD | mag □ | HFW | det | ———— 30 μm ———— |
| 20.00 kV | 5.0 | 8.6 mm | 5 000 x | 82.9 μm | ETD | Quanta FEG250 |

【Figure】 5

【Figure】 6

【Figure】 7

Twin martensite

0.5 um

【Figure】 8

【Figure】 9

【Figure 】 10

# INTERNATIONAL SEARCH REPORT

International application No.

**PCT/CN2023/131146**

## A. CLASSIFICATION OF SUBJECT MATTER

C22C38/02(2006.01)i; C22C38/04(2006.01)i; C22C38/06(2006.01)i; C22C38/24(2006.01)i; C22C38/26(2006.01)i; C22C38/28(2006.01)i; C22C38/32(2006.01)i; C22C38/38(2006.01)i; C23C2/12(2006.01)i; C21D1/26(2006.01)i; C21D9/00(2006.01)i; C22C33/04(2006.01)i

According to International Patent Classification (IPC) or to both national classification and IPC

## B. FIELDS SEARCHED

Minimum documentation searched (classification system followed by classification symbols)

IPC: C22C, C23C, C21D

Documentation searched other than minimum documentation to the extent that such documents are included in the fields searched

Electronic data base consulted during the international search (name of data base and, where practicable, search terms used)

CNABS, CNTXT, ENTXTC, ENTXT, VEN, WPABSC, WPABS, DWPI, CJFD, 超星读秀, DUXIU, CNKI, Web of Science, ScienceDirect: 育材堂, 东北大学, 易红亮, 孙正启, 杨达朋, 秦华杰, 周澍, 碳, C, 锰, Mn, 硅, Si, 铬, Cr, 硼, B, 铝, Al, 马氏体相变, 马氏体转变, 终了温度, 终点温度, 结束温度, 结束点, 终了点, 淬透性系数, carbon, manganese, silicon, chromium, chrome, boron, aluminium, aluminum, martensitic transformation finish temperature, martensite finish temperature, martensitic finish temperature

## C. DOCUMENTS CONSIDERED TO BE RELEVANT

| Category* | Citation of document, with indication, where appropriate, of the relevant passages | Relevant to claim No. |
|---|---|---|
| PX | CN 115478227 A (YUCAITANG (SUZHOU) MATERIAL TECHNOLOGY CO., LTD. et al.) 16 December 2022 (2022-12-16) claims 1-36 | 1-36 |
| A | CN 108374127 A (YUCAITANG (SUZHOU) MATERIAL TECHNOLOGY CO., LTD.) 07 August 2018 (2018-08-07) description, paragraphs 0012-0036 | 1-36 |
| A | CN 104160046 A (KOBE STEEL LTD.) 19 November 2014 (2014-11-19) entire document | 1-36 |
| A | CN 104160051 A (KOBE STEEL LTD.) 19 November 2014 (2014-11-19) entire document | 1-36 |

☑ Further documents are listed in the continuation of Box C.   ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **01 February 2024** | **06 February 2024** |

| Name and mailing address of the ISA/CN | Authorized officer |
|---|---|
| **China National Intellectual Property Administration (ISA/ CN) China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2023/131146** |

**C.    DOCUMENTS CONSIDERED TO BE RELEVANT**

| Category* | Citation of document, with indication, where appropriate, of the relevant passages | Relevant to claim No. |
|---|---|---|
| A | CN 104195455 A (INSTITUTE OF METAL RESEARCH, CHINESE ACADEMY OF SCIENCES) 10 December 2014 (2014-12-10)<br>entire document | 1-36 |
| A | CN 106399837 A (NORTHEASTERN UNIVERSITY et al.) 15 February 2017 (2017-02-15)<br>entire document | 1-36 |
| A | CN 107083475 A (HUAIAN CISRI CO., LTD.) 22 August 2017 (2017-08-22)<br>entire document | 1-36 |
| A | CN 113802065 A (YUCAITANG (SUZHOU) MATERIAL TECHNOLOGY CO., LTD. et al.) 17 December 2021 (2021-12-17)<br>entire document | 1-36 |
| A | JP 2017179588 A (JFE STEEL CORP.) 05 October 2017 (2017-10-05)<br>entire document | 1-36 |
| A | US 2003173006 A1 (CARGILL, INC.) 18 September 2003 (2003-09-18)<br>entire document | 1-36 |

Form PCT/ISA/210 (second sheet) (July 2022)

**INTERNATIONAL SEARCH REPORT**
Information on patent family members

International application No.

**PCT/CN2023/131146**

| Patent document cited in search report | | | Publication date (day/month/year) | Patent family member(s) | | | Publication date (day/month/year) |
|---|---|---|---|---|---|---|---|
| CN | 115478227 | A | 16 December 2022 | CN | 115478227 | B | 16 June 2023 |
| CN | 108374127 | A | 07 August 2018 | EP | 3789509 | A1 | 10 March 2021 |
| | | | | JP | 2021522417 | A | 30 August 2021 |
| | | | | JP | 7336144 | B2 | 31 August 2023 |
| | | | | WO | 2019205699 | A1 | 31 October 2019 |
| | | | | KR | 20210003236 | A | 11 January 2021 |
| | | | | US | 2021214818 | A1 | 15 July 2021 |
| CN | 104160046 | A | 19 November 2014 | US | 2015013856 | A1 | 15 January 2015 |
| | | | | US | 9938597 | B2 | 10 April 2018 |
| | | | | EP | 2824196 | A1 | 14 January 2015 |
| | | | | EP | 2824196 | B1 | 04 July 2018 |
| | | | | WO | 2013133137 | A1 | 12 September 2013 |
| | | | | KR | 20140119811 | A | 10 October 2014 |
| | | | | JP | 2013185245 | A | 19 September 2013 |
| | | | | JP | 6001883 | B2 | 05 October 2016 |
| | | | | IN | 201406613 | P4 | 01 July 2016 |
| | | | | IN | 388155 | B | 04 February 2022 |
| | | | | CN | 104160046 | B | 03 February 2016 |
| CN | 104160051 | A | 19 November 2014 | KR | 20140127857 | A | 04 November 2014 |
| | | | | KR | 101609968 | B1 | 06 April 2016 |
| | | | | EP | 2824204 | A1 | 14 January 2015 |
| | | | | WO | 2013133165 | A1 | 12 September 2013 |
| | | | | US | 2015090377 | A1 | 02 April 2015 |
| | | | | JP | 2013185243 | A | 19 September 2013 |
| | | | | JP | 5756774 | B2 | 29 July 2015 |
| | | | | CN | 104160051 | B | 24 August 2016 |
| | | | | IN | 201406626 | P4 | 01 July 2016 |
| | | | | IN | 383089 | B | 03 December 2021 |
| CN | 104195455 | A | 10 December 2014 | CN | 104195455 | B | 02 March 2016 |
| CN | 106399837 | A | 15 February 2017 | EP | 3483299 | A1 | 15 May 2019 |
| | | | | JP | 2019529717 | A | 17 October 2019 |
| | | | | JP | 7207660 | B2 | 18 January 2023 |
| | | | | JP | 2022023165 | A | 07 February 2022 |
| | | | | WO | 2018006490 | A1 | 11 January 2018 |
| | | | | KR | 20190042563 | A | 24 April 2019 |
| | | | | KR | 102544667 | B1 | 16 June 2023 |
| | | | | US | 2019309385 | A1 | 10 October 2019 |
| | | | | US | 11377703 | B2 | 05 July 2022 |
| | | | | CN | 106399837 | B | 13 March 2018 |
| CN | 107083475 | A | 22 August 2017 | CN | 107083475 | B | 23 August 2019 |
| CN | 113802065 | A | 17 December 2021 | CN | 113802065 | A | 29 March 2022 |
| JP | 2017179588 | A | 05 October 2017 | JP | 6508176 | B2 | 08 May 2019 |
| US | 2003173006 | A1 | 18 September 2003 | AU | 2003220162 | A1 | 29 September 2003 |
| | | | | CA | 2478998 | A1 | 25 September 2003 |
| | | | | WO | 03078667 | A1 | 25 September 2003 |
| | | | | US | 6786980 | B2 | 07 September 2004 |
| | | | | MX | 2004008884 | A1 | 01 January 2005 |
| | | | | MX | 2004008882 | A1 | 01 February 2006 |
| | | | | MX | 240802 | B | 05 October 2006 |

Form PCT/ISA/210 (patent family annex) (July 2022)

INTERNATIONAL SEARCH REPORT
Information on patent family members

International application No.

**PCT/CN2023/131146**

| Patent document cited in search report | Publication date (day/month/year) | Patent family member(s) | | Publication date (day/month/year) |
|---|---|---|---|---|
| | | MX 244243 B | | 20 March 2007 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 106399837 A
- CN 108374127 A
- CN 106574348 A

**Non-patent literature cited in the description**

- **ZHANG GUOQIANG et al.** Progress in Research on Prediction Model of Hardenability of Steel. *Acta Metallurgica Sinica*, 2019, vol. 44 (4), 224-228